# FASCICULE DE BREVET EUROPEEN

(11) **EP 2 895 410 B1**
(45) Date de publication et mention de la délivrance du brevet: **27.03.2019**
(21) Numéro de dépôt: 13837954.0
(22) Date de dépôt: 12.09.2013
(51) Int. Cl.: B65H 29/12, B65H 29/58, B65H 29/66, B65H 33/12

(54) **SYSTEME POUR REPOSITIONNER DES OBJETS A PLAT**
VERFAHREN ZUR NEUPOSITIONIERUNG FLACHER OBJEKTE
SYSTEM FOR REPOSITIONING FLAT OBJECTS

(30) Priorité: 12.09.2012 CA 2789538
(43) Date de publication de la demande: 22.07.2015
(73) Titulaire: CONCEPTION IMPACK DTCI INC., Saint-Jacques QC J0K 2R0 (CA)
(72) Inventeur: THÉRIAULT, Dominic, Saint-Jacques, Québec J0K 2R0 (CA); TREMBLAY, Mathieu, Laval, Québec H7N 3B2 (CA); LEMAY, Jonathan, Sainte-Anne-des Plaines, Québec J0N 1H0 (CA)
(74) Mandataire: Nuss, Laurent
(86) Numéro de dépôt international: PCT/CA2013/050701
(87) Numéro de publication internationale: WO 2014/040187

(56) Documents cités:
- EP-A2- 0 767 126
- DE-U1- 8 717 500
- DE-U1- 29 700 107
- FR-A1- 2 518 514
- GB-A- 2 264 930
- US-A- 3 348 678
- US-A- 4 065 117
- US-A- 5 713 453
- US-A1- 2007 240 969
- US-A1- 2009 223 180
- US-B2- 7 624 855

## Description

### DOMAINE TECHNIQUE

Le domaine technique concerne le repositionnement d'objets à plat, par exemple des boîtes pliantes en configuration plane, et qui sont disposés en chevauchement de façon à en optimiser la manutention, notamment le transport et le stockage dans un récipient.

### ÉTAT DE LA TECHNIQUE

Dans l'industrie de l'emballage, la fabrication des boîtes pliantes s'effectue habituellement sur une ligne de production en pliant et en collant des découpes au moyen de machines communément appelées plieuses-colleuses. Généralement, les boîtes pliantes sont délivrées sous la forme d'un flux continu à la sortie d'une plieuse-colleuse. Les boîtes sont alors dans une configuration plane, c'est-à-dire que les différents panneaux de chaque boîte sont repliés pour essentiellement éliminer tout le volume interne de chaque boîte et ainsi minimiser l'espace occupé avant leur première utilisation. Chaque boîte en configuration plane a alors une longueur, une largeur et une épaisseur, laquelle épaisseur est d'une dimension significativement moindre que la longueur et la largeur.

Les boîtes pliantes sont généralement disposées en chevauchement sur un convoyeur, lequel est généralement un tapis roulant disposé à l'horizontale et qui reçoit les boîtes sur sa surface supérieure en mouvement. Le chevauchement est réalisé en superposant partiellement les boîtes les unes sur les autres dans le sens de déplacement du convoyeur. Le flux de boîtes chevauchantes forme ce qui est appelé une nappe. Une nappe comporte une multitude de boîtes chevauchantes en configuration plane. La nappe à la sortie de la plieuse-colleuse est appelée la nappe initiale. La nappe initiale peut être continue ou discontinue. La nappe initiale est discontinue lorsque deux boîtes successives sont espacées sur le convoyeur.

Il est fréquent que les boîtes pliantes en configuration plane n'aient pas une épaisseur uniforme. Certaines parties de chaque boîte sont ainsi plus épaisses que d'autres. Le cas échéant, l'épaisseur maximale se trouve souvent dans le sens de la largeur des boîtes pliantes en configuration plane. Des variantes sont cependant possibles. Quoi qu'il en soit, les variations d'épaisseur compliquent la manutention de ces boîtes, notamment leur transport et leur stockage dans un récipient avant leur première utilisation, par exemple le moment où les boîtes seront dépliées afin de créer un volume de chargement. Les boîtes resteront entretemps en configuration plane.

Il arrive souvent que l'épaisseur maximale se trouve le long du bord qui correspondra à la partie inférieure de la boîte dépliée en position d'utilisation, donc à la partie qui correspondra au fond de la boîte dépliée. Lors de leur fabrication, ces boîtes pliantes sortent alors de la plieuse-colleuse en configuration plane et selon une orientation où le bord antérieur qui est transversal à la trajectoire de déplacement est celui où l'épaisseur est maximale. L'épaisseur de ces boîtes est plus petite au bord postérieur transversal. Les boîtes pliantes sont alors toutes dans le même sens, ce qui n'est pas avantageux lorsque les boîtes doivent être empilées pour former des paquets de boîtes superposées. Chaque paquet est formé d'un certain nombre de boîtes qui peuvent être attachées ou non à la suite de leur empilement, par exemple par une machine d'emballage. La présence d'un bord plus épais sur un seul côté et va alors modifier la symétrie des paquets, ce qui complique donc l'empilement des paquets en vue de leur transport et leur stockage. La solution est d'alterner le sens relatif des boîtes, par exemple à l'intérieur même d'un paquet ou d'un paquet à l'autre, de façon à optimiser l'espace occupé par les boîtes dans un récipient. Ce déplacement relatif des boîtes les unes par rapport aux autres est souvent appelé « inversion ». Le document US 2009/0223180 A1 décrit un système ayant des convoyeurs permettant d'inverser des articles. En effet, le document décrit un système pour repositionner des objets à plat et pouvant être disposés en chevauchement à une entrée du système, les objets ayant tous une même orientation initiale les uns par rapport aux autres le long d'une trajectoire d'entrée qui est sensiblement linéaire et horizontale, le système incluant: un premier convoyeur de déviation et un deuxième convoyeur de déviation , chacun ayant une entrée située en aval de l'entrée du système et une sortie qui est située immédiatement en amont d'une sortie du système, la sortie du premier convoyeur de déviation et la sortie du deuxième convoyeur de déviation étant espacées latéralement l'une de l'autre et situées respectivement sur un côté droit et sur un côté gauche d'une zone commune de réception située à la sortie du système, les deux trajectoires de déviation ayant, aux sorties des convoyeurs de déviation des directions qui sont sensiblement parallèles et diamétralement opposées l'une par rapport à l'autre; et un dispositif d'aiguillage ayant une entrée et deux sorties distinctes, une pour chaque convoyeur de déviation verticale, l'entrée du dispositif d'aiguillage étant alignée avec la trajectoire d'entrée des objets et chaque sortie du dispositif d'aiguillage . Le premier convoyeur de déviation des dispositifs divulgués par le dit document n'a que des segments verticaux incurvés situés au-dessus de l'entrée du système, et le deuxième convoyeur de déviation n'a que des segments verticaux incurvés situés au-dessous de l'entrée du système. Les convoyeurs de déviation divulgués définissent donc des trajectoires de déviation verticale.

L'inversion des boîtes pliantes est une opération qui peut être réalisée de façon manuelle mais il existe des systèmes pour faire le repositionnement de façon mécanisée. Ces systèmes sont cependant sujets à des défis inhérents à ce genre d'opération. Par exemple, les systèmes connus sont souvent composés de courbes dans le plan vertical et qui fléchissent les boîtes lors de leur traitement, ce qui rend généralement impossible l'utilisation de ces systèmes pour traiter des objets à plat inflexibles lorsqu'ils sont en configuration plane. Des boîtes en carton ondulé ou en carton microcannelures sont des exemples de tels objets à plat inflexibles car ils sont faits d'un matériau plus rigide que du carton plat. Certaines boîtes en carton microcannelures peuvent se déformer dès qu'ils subissent une légère flexion au-delà d'un angle critique, souvent même de moins de 2 degrés, par rapport au plan médian de la boîte, créant alors une déformation permanente et généralement esthétiquement inacceptable sur au moins l'une des faces majeures de la boîte. On peut alors parler d'objets ayant une flexibilité critique. Le traitement de ces boîtes dans les systèmes connus nécessiterait des dimensions beaucoup trop importantes, minimalement du point de vue pratique, pour pouvoir obtenir des trajectoires courbes en deçà de la flexion maximale de ces boîtes. Il est aussi fréquent que l'espace disponible sur un plancher d'usine ne soit tout simplement pas assez grand pour permettre d'obtenir les dimensions souhaitées. D'autre part, un système existant conçu pour le traitement d'objets à plat présentant une certaine flexibilité peut difficilement, voire aucunement, être modifié pour traiter adéquatement des objets à plat inflexibles. La versatilité des systèmes connus est donc souvent limitée.

Un autre défi des systèmes pour faire l'inversion mécanisée des boîtes est celui de la vitesse d'opération. Les systèmes doivent être en mesure de traiter les objets à une cadence aussi grande que possible afin d'optimiser la chaîne de production et que toutes les opérations soient faites de façon synchronisée. L'augmentation des vitesses d'opération est continuellement recherchée.

Les documents suivants proposent différentes approches pour le repositionnement d'objets, par exemple de boîtes pliantes: EP 1 179 502; EP 1 657, 200; EP 2 230 204, US-3,738,644; US-4,678,172; US-5,078,250; US-5,158,278; US-5,396,752; US-7,360,636; US-8,443,957; US-2003/116476; US-2005/061627; US-2005/285332; US-2012/000748; WO 2009/110979.

Malgré tout ce qui a déjà été proposé au fil des années, des améliorations dans le domaine technique concerné sont toujours et continuellement nécessaires.

### SOMMAIRE

Le concept proposé concerne un système polyvalent permettant de modifier l'orientation d'objets à plat, par exemple des objets ayant une épaisseur variable, afin de former diverses configurations d'objets disposés en nappe. Différentes mises en oeuvre pour l'inversion multidirectionnelle de paquets d'objets à plat sont proposées, incluant l'indexation des objets. Ce concept trouve une application particulièrement avantageuse dans le domaine de l'emballage, notamment pour le repositionnement de boîtes pliantes en configuration plane.

Dans certaines mises en oeuvre, il est également possible d'inclure un système d'inversion hélicoïdal, notamment à renversement dynamique.

Différentes méthodes de mises en oeuvre sont possibles. Par exemple, l'une d'elles consiste à séparer la nappe d'entrée en paquets comptés, d'aiguiller les paquets successivement dans deux sections de transport, de transférer les paquets à une équerre et de les joindre pour former une nappe continue de paquets inversés à la sortie. Le mode de fonctionnement de cette méthode d'utilisation, résultant en une inversion horizontale des paquets, est le suivant : les objets arrivent en nappe, par exemple en provenance de la plieuse-colleuse, et ils sont comptés puis séparés par paquets. Le dispositif d'aiguillage doit changer de position à l'intérieur de la plage de temps et de distance d'une séparation entre deux paquets. Les objets en nappe sont ensuite transportés puis indexés dans leur section gauche/droite de transport respective. Ils sont ensuite transférés à l'équerre avec ou sans séparation dans la nappe finale selon ce qui est désiré. Le résultat final donne une nappe avec les paquets d'objets inversés horizontalement.

Une autre mise à oeuvre consiste à permettre aussi l'indexation en nappe en plus de l'inversion des paquets en nappe. Cette combinaison de fonctionnalités représente un avantage par rapport aux indexeurs de nappe permettant seulement l'indexation. Le système peut être utilisé comme indexeur de nappe pouvant tourner les objets en nappe toujours vers la section de transport de gauche (rotation 90 degrés vers la droite) ou toujours vers la section de droite (rotation de 90 degrés vers la gauche) sans utiliser le dispositif d'aiguillage. Les objets sont transférés à l'équerre avec possibilité de séparer ou non la nappe finale en paquets comptés.

Une autre méthode d'utilisation consiste à séparer la nappe d'entrée en objets individuels, d'aiguiller les objets comptés dans la ou les sections de transport, d'inverser les objets individuels dans une ou plusieurs section hélicoïdale fixe ou dynamique et de reformer une nappe constituée de paquets d'objets comptés et successivement inversés dans une ou plusieurs directions possibles. Cette méthode d'utilisation peut être réalisée de plusieurs façons, chacune ayant ses propriétés et son agencement des étapes de fonctionnement particulier permettant au moins une orientation des paquets inversés dans la nappe de sortie du système.

Le système peut comprendre une section d'inversion hélicoïdale fixe. Les objets sont alors comptés individuellement et séparés. Le dispositif d'aiguillage change de position après chaque comptage du nombre d'objets par paquet et doit compléter la commutation au cours de la période de temps entre deux objets successifs. Ce temps de commutation maximal admissible dépend de la vitesse de fonctionnement maximum du système en objets par heure. Chaque objet individuel suit le chemin de transport correspondant de ces lots et est tourné de 90 degrés à gauche ou à droite. Dans l'un des parcours de transport, que ce soit à gauche ou à droite, une courroie d'inversion hélicoïdale fixe inverse chaque objet le long d'un axe Y. Tous les objets individuels sont ensuite remis en nappe sur un convoyeur de transfert à l'équerre pour former une nouvelle nappe constituée de paquets inversés verticalement.

Une autre mise en oeuvre est un système similaire à celui présenté précédemment mais dans lequel la section hélicoïdale est omise. Sans l'inversion hélicoïdale, les paquets ne seront inversés qu'horizontalement. Parce que l'inversion horizontale peut provoquer des particularités de l'opération d'emballage et peut ne pas être acceptable pour tous les types d'objets, cette mise en oeuvre ne serait pas aussi universelle qu'une mise en oeuvre permettant l'inversion verticale. Elle a cependant l'avantage de réduire les coûts et la complexité liés à la section d'inversion hélicoïdale.

Une autre mise en oeuvre possible consiste à utiliser deux sections dynamiques d'inversion hélicoïdale, une dans chaque section de transport. La section d'inversion hélicoïdale aurait un système pour tordre et redresser la courroie en tournant de 180 degrés à l'une des extrémités de la section hélicoïdale. Chaque section d'inversion peut être sélectionnée pour inverser les objets le long de l'axe X ou de laisser les objets passer directement au travers. Cette sélection se ferait pendant le temps de réglages, de sorte que chaque section hélicoïdale resterait dans la même position pendant le fonctionnement, le temps de changement de position n'étant donc pas critique. Cela permettrait quatre configurations différentes d'inversion des paquets, soit : (1) aucune inversion hélicoïdale (inversion horizontale des paquets); (2) inversion hélicoïdale gauche (inversion verticale des paquets); (3) inversion hélicoïdale droite (inversion verticale des paquets); et (4) double inversion hélicoïdale (inversion horizontale des paquets).

Une autre possibilité est de n'utiliser qu'une seule section dynamique d'inversion hélicoïdale. Cette section d'inversion aurait un élément de commutation plus rapide pour passer d'une position à l'autre dans l'intervalle de temps entre deux objets. La section d'inversion serait située entre le dispositif de séparation et le dispositif d'aiguillage de sorte que chaque objet individuel pourrait être inversé ou non à la verticale avant de passer aux voies de transport. Cette mise en oeuvre permettrait également toutes les quatre configurations d'inversion des paquets.

Une autre mise en oeuvre consiste à placer la section d'inversion hélicoïdale après la section à de transfert à l'équerre. Cette combinaison nécessiterait une seule voie de transport et une section rapide d'inversion dynamique. Cette combinaison est plus simple que la précédente, mais ne permettrait pas toutes les quatre configurations différentes d'inversion des paquets. L'inversion serait de type vertical.

Une autre mise en oeuvre consiste à placer la section d'inversion hélicoïdale dynamique (rapide) juste avant une section de compression d'une plieuse-colleuse. Elle nécessiterait donc des modifications aux composantes d'une plieuse-colleuse comparativement aux autres mises en oeuvre précédentes qui s'installent à la sortie standard d'une plieuse-colleuse. Par contre, elle a pour avantage de se situer avant la mise en nappe de la plieuse-colleuse, donc de traiter les objets individuellement sans avoir besoin de section de pré-séparation ou de séparation.

Le système proposé peut être utilisé comme indexeur de nappe pouvant tourner les objets individuellement toujours vers la section de transport de gauche (rotation 90 degrés vers la droite) ou toujours vers la section de droite (rotation de 90 degrés vers la gauche) sans utiliser un dispositif d'aiguillage. Les boîtes sont transférées à l'équerre avec possibilité de séparer ou non la nappe finale en paquets comptés. Les sections hélicoïdales peuvent ou non être utilisées afin de créer des nappe de sortie dans l'orientation désirée.

Certaines mises en oeuvre impliquent que les objets demeurent en nappe lors des indexations. Les objets sont donc comptés en nappe avec un capteur spécifiquement conçu à cet effet puis la nappe est séparée en paquets d'objets d'un nombre prédéterminé. La séparation est effectuée par une unité de séparation constituée de deux sections de convoyeurs indépendantes, chacune des sections comporte une courroie supérieure et une courroie inférieure. La séparation est effectuée lorsqu'une fois le compte atteint, la première section de convoyeur arrête et la deuxième section de convoyeur accélère tirant ainsi les objets qui sont entre les courroies de la deuxième section.

Les mises en oeuvre permettant une inversion verticale implique la présence d'une section d'inversion hélicoïdale sur une des deux branches de transport du système. Comme les objets ne peuvent être inversés en nappe dans une section d'inversion hélicoïdale, ce qui donnerait sinon une nappe sous-empilée, elles doivent être séparées une par un dispositif de séparation situé dans la section d'introduction du système. Pour se faire, une roue de pression repose par gravité sur la nappe d'objets qui sort par exemple de la plieuse-colleuse. La position longitudinale de la roue est calculée en fonction de la longueur des objets de façon à ce que la fin de la roue de pression retienne l'objet qui succède celui qui est tiré par les courroies de séparation.

Il arrive parfois pour certains types d'objets, particulièrement dans le cas de boîtes de carton plat, qu'une étape préliminaire de pré-séparation soit nécessaire afin d'augmenter la distance entre chaque objet et faciliter la séparation complète. Le système peut donc comprendre un dispositif de pré-séparation. Le dispositif de pré-séparation est constitué d'un convoyeur de pré-séparation qui est installé entre le convoyeur de compression de la plieuse-colleuse et le système de séparation et de deux roues de pression supplémentaires qui sont installées de façon à augmenter le pas de la nappe dans un premier temps et de séparer complètement les objets les uns des autres dans un deuxième temps avec le dispositif de séparation. Comme le dispositif de séparation, les roues de pression ont un ajustement longitudinal et la position longitudinale des roues est calculée en fonction de la longueur des objets. L'une des roues de pression met une pression sur les objets qui accélèrent et pré-séparent alors qu'une autre roue de pression retient l'objet suivant celle qui est tirée par le dispositif de séparation.

Le système doit inverser une quantité prédéterminée d'objets par paquets. Pour se faire, un dispositif d'aiguillage est disposé à la sortie de l'introduction (comptage-séparation). La fonction du dispositif d'aiguillage est d'aiguiller successivement une quantité prédéterminée d'objets disposées en nappe ou individuelles vers une des deux directions puis changer l'orientation du dispositif d'aiguillage à l'autre position une fois le compte de boîtes prédéterminé atteint. Ce dispositif d'aiguillage est sous la forme d'un système d'aiguillage rotatif à deux positions qui peut être très avantageux en soi. Le système rotatif est constitué de deux segments divergents de convoyeurs à rouleaux commandés monté sur un axe de rotation de façon à avoir un angle d'environ 30 degrés (angle qui peut différer selon les applications) entre les deux plans des segments de convoyeurs à rouleaux. Plus l'angle entre les deux plans des deux convoyeurs à rouleaux est grands plus la vitesse de positionnement des convoyeurs à rouleaux sera grande pour un même temps d'indexation et vice et versa. Le mouvement de rotation peut être effectué avec des cylindres pneumatiques ou un moteur rotatif.

Le dispositif d'aiguillage peut être aussi un aiguillage par pincement à deux positions. Le système à pincement est constitué de deux segments divergents de convoyeurs à rouleaux commandés monté côte à côte. Alternativement, les deux parties (supérieure et inférieure) d'un des deux segments de convoyeurs à rouleaux se ferme alors que les deux parties de l'autre segment de convoyeur à rouleau s'ouvrent. Les objets sont alors aiguillés du côté où le segment est fermé.

Après le dispositif d'aiguillage, les objets sont transportés puis indexés de façon à arriver dans une orientation perpendiculaire à l'orientation initiale des objets à l'entrée du système afin de pouvoir être transférées à l'équerre, par exemple dans un axe quasi aligné avec l'axe initiale de la nappe à l'entrée du système.

Dans plusieurs mises en oeuvre, le système comporte deux sections de transport et d'indexation, à savoir une section droite et une section gauche. Les sections de transport et d'indexation sont constituées de segments de convoyeurs à rouleaux commandés avec une section des roues de pression supérieures. De plus, au moins l'une des deux sections comporte un segment de convoyeur extensible qui s'ajuste selon la longueur des boîtes.

Dans le cas d'un système avec retournement hélicoïdal fixe, l'inversion verticale implique l'ajout d'une section de retournement afin de faire pivoter les objets un par un selon l'axe X. Un dispositif de retournement hélicoïdal peut alors utilisé. Il est constitué de deux courroies commandées par un moteur. Les deux courroies sont disposées de façon à ce que les objets soient tenus entre les deux courroies et tournées de 180 degrés lors de leur passage dans la section de retournement. Le dispositif de retournement hélicoïdal est positionné à l'intérieur de la section de transport droite. La section de retournement pourrait aussi être positionnée sur la section de transport gauche.

Dans d'autres mises en oeuvre, une section hélicoïdale dynamique est prévue pour passer d'une position qui inverse les objets de 180 degrés à une position qui laisse passer tout droit les objets. Pour ce faire, une des deux extrémités de la courroie est montée sur un arceau rotatif qui permet de retourner les poulies supérieures et inférieures de 180 degrés et de revenir à la position initiale. La rotation de l'arceau peut être commandée par servomoteur, par pneumatique ou d'une autre façon dépendamment du temps de retournement nécessaire. Le temps de déplacement de la position initiale à la position de retournement peut être assez lent dans ce cas puisqu'il est effectué durant la mise en train. Par contre, dans certains cas, il peut être nécessaire que le retournement soit rapide puisqu'il s'effectue cycliquement et doit être compléter durant l'intervalle de temps entre le passage de deux objets.

Suite aux sections de transport, d'indexation et de retournement hélicoïdal, les objets peuvent être transférés à l'équerre puis mises en nappe. Le transfert à l'équerre et la mise sont fait en recevant les objets de part et d'autres des deux sections de transports sur un convoyeur qui positionné à 90 degrés des deux sections de transport et indexation. Les boîtes tombent sur le convoyeur de transfert dont la vitesse est calculée de façon à avancer d'un pas donné d'une longueur prédéterminée, à chacun des objets formant ainsi une nappe. Deux guides servent de butés aux objets puis le convoyeur extensible est ajusté selon la largeur des boîtes.

Selon un aspect du concept, il est proposé un système pour repositionner des objets à plat et pouvant être disposés en chevauchement à une entrée du système, les objets ayant tous une même orientation initiale les uns par rapport aux autres le long d'une trajectoire d'entrée qui est sensiblement linéaire et horizontale, le système incluant un premier convoyeur de déviation latérale et un deuxième convoyeur de déviation latérale, chacun ayant une entrée située en aval de l'entrée du système et une sortie qui est située immédiatement en amont d'une sortie du système, le premier convoyeur de déviation latérale définissant une première trajectoire de déviation ayant au moins un segment horizontal incurvé et le deuxième convoyeur de déviation latérale définissant une deuxième trajectoire de déviation ayant au moins un segment horizontal incurvé, la sortie du premier convoyeur de déviation latérale et la sortie du deuxième convoyeur de déviation latérale étant espacées latéralement l'une de l'autre et situées respectivement sur un côté droit et un côté gauche d'une zone commune de réception située à la sortie du système, les deux trajectoires de déviation ayant, aux sorties des convoyeurs de déviation latérale, des directions qui sont sensiblement parallèles et diamétralement opposées l'une par rapport à l'autre; et un dispositif d'aiguillage ayant une entrée et deux sorties distinctes, une pour chaque convoyeur de déviation latérale, l'entrée du dispositif d'aiguillage étant alignée avec la trajectoire d'entrée des objets et chaque sortie du dispositif d'aiguillage étant située, une à la fois, à une position respective où la sortie est immédiatement en amont de l'entrée du convoyeur de déviation latérale correspondant pour créer de façon séquentielle, entre l'entrée et la sortie du système, un premier circuit de transport passant par la première trajectoire de déviation et se terminant du côté droit de la zone commune de réception, et un deuxième circuit de transport passant par la deuxième trajectoire de déviation et se terminant du côté gauche de la zone commune de réception, afin d'inverser l'orientation des objets qui auront été transportés dans le premier circuit de transport par rapport aux objets qui auront été transportés dans le deuxième circuit de transport.

Davantage de détails sur les différents aspects du concept proposé et sur les différentes combinaisons possibles de caractéristiques techniques ressortiront à la lumière de la description détaillée qui suit et des figures correspondantes.

### BRÈVE DESCRIPTION DES FIGURES

La figure 1 illustre un exemple d'un objet à plat, plus particulièrement une boîte pliante.
La figure 2 illustre un exemple de récipient dans lequel est placé un lot de boîtes formé de plusieurs paquets.
La figure 3 est une vue de côté illustrant, de façon semi-schématique, des boîtes en chevauchement en amont de l'endroit où ces boîtes seront repositionnées.
La figure 4 est une vue isométrique d'un exemple d'un système de repositionnement incorporant le concept proposé.
La figure 5 est une vue du dessus du système de la figure 4.
La figure 6 est une vue semi-schématique de la zone commune de réception du système de la figure 4.
La figure 7 est une vue isométrique de la partie inférieure du dispositif d'aiguillage du système de

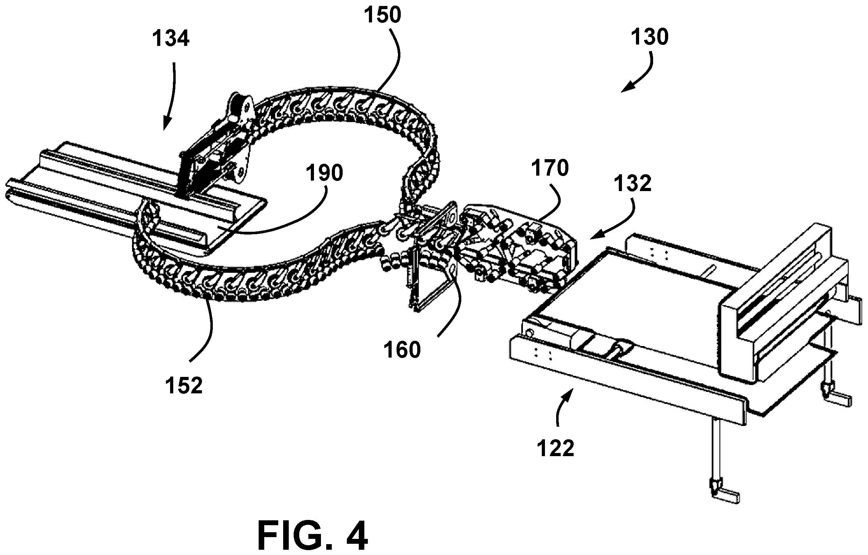

la figure 4.

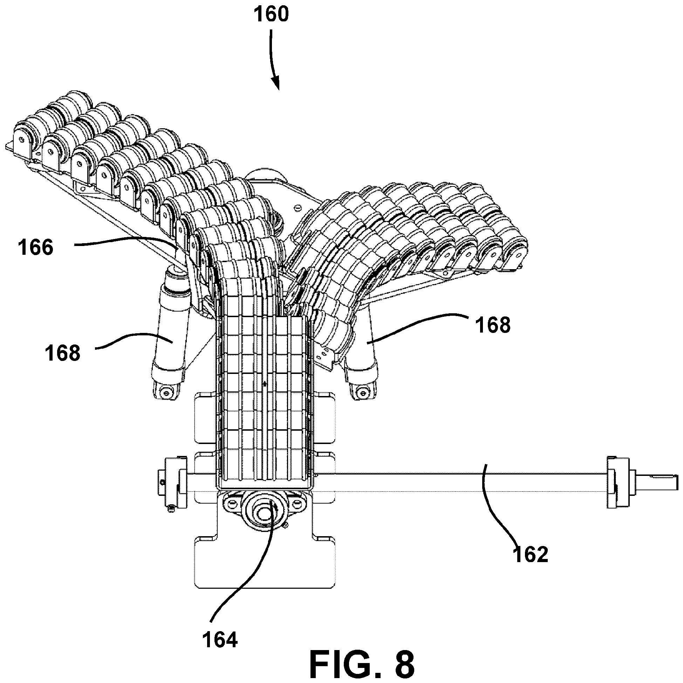

La figure 8 est une vue isométrique de la partie inférieure du dispositif d'aiguillage du système de
la figure 4, le dispositif d'aiguillage étant alors dans la deuxième position.

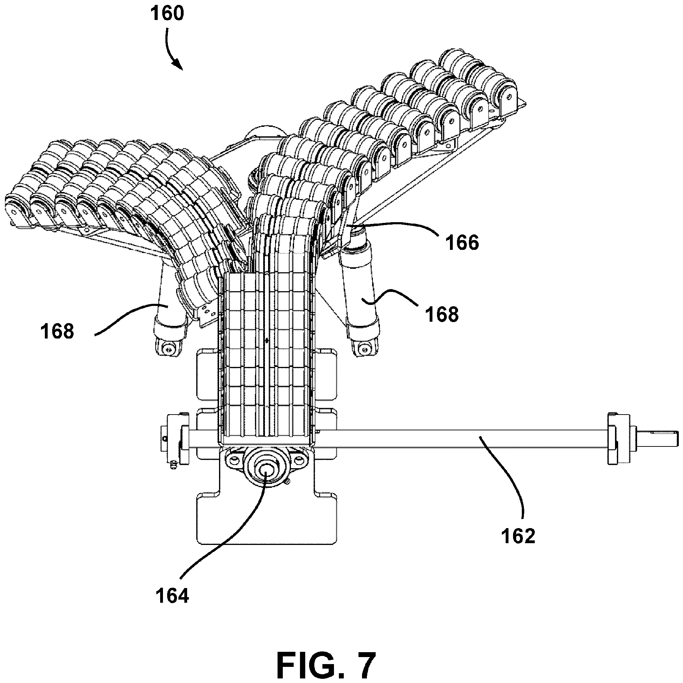

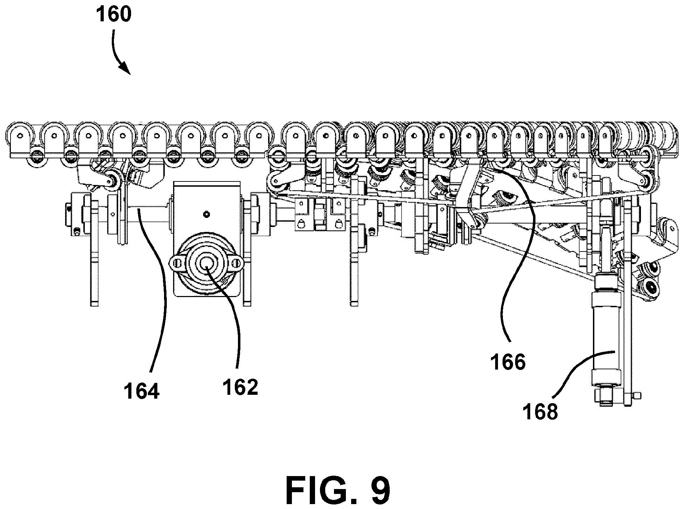

La figure 9 est une vue d'élévation montrant le côté latéral de la partie inférieure du dispositif d'aiguillage de la figure 7.

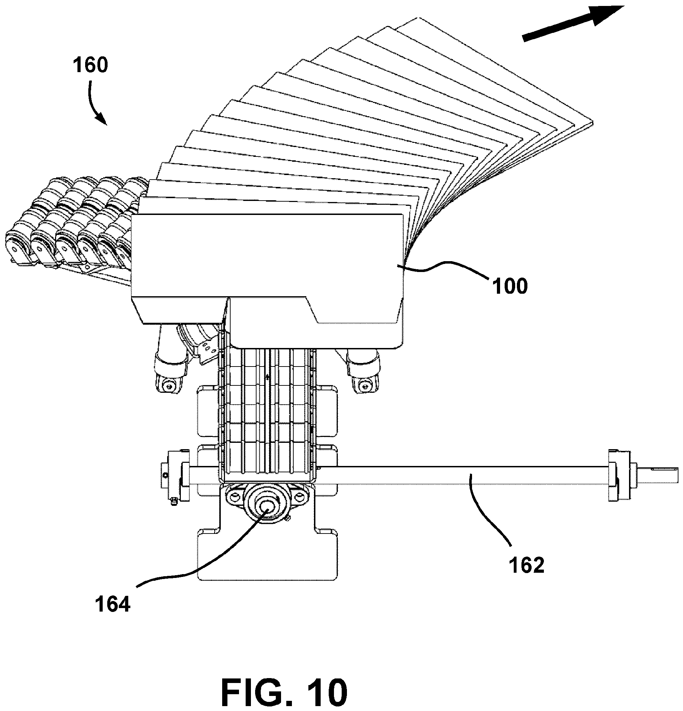

La figure 10 est une vue similaire à la figure 7 mais avec un exemple d'une nappe de boîtes envoyée vers le côté droit.

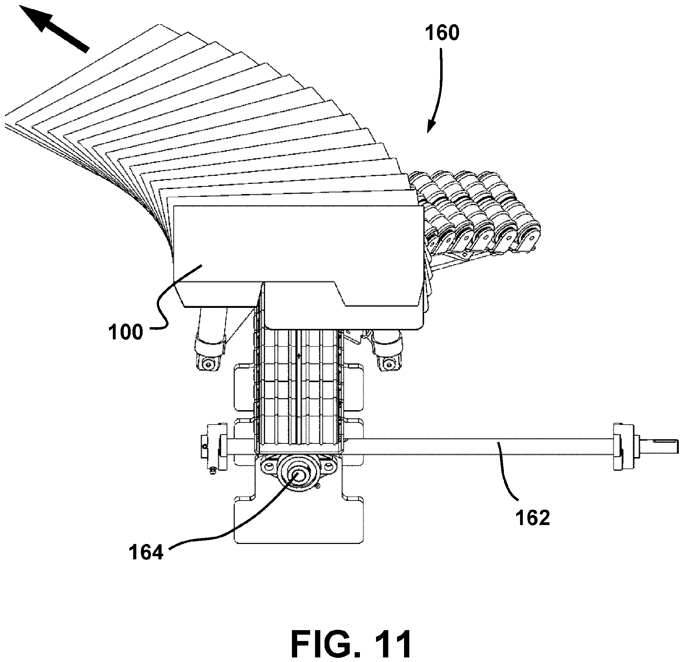

La figure 11 est une vue similaire à la figure 10 mais avec un exemple d'une nappe de boîtes envoyée vers le côté gauche.

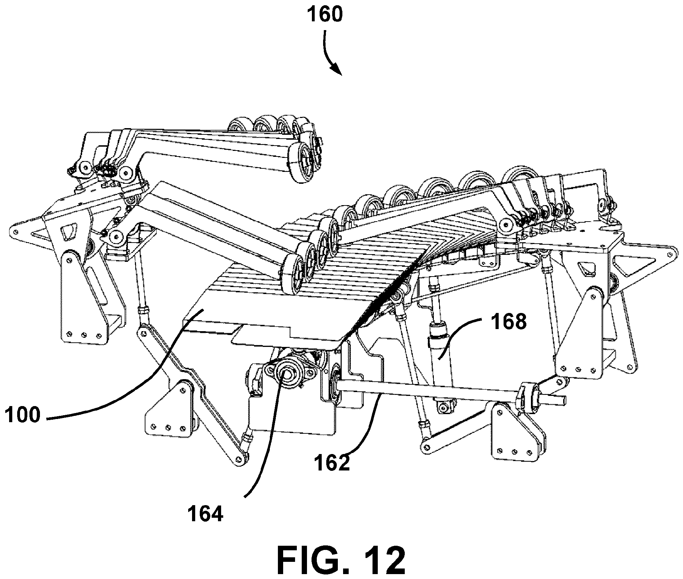

La figure 12 est une vue isométrique similaire à la figure 10 mais avec aussi la partie supérieure du dispositif d'aiguillage.

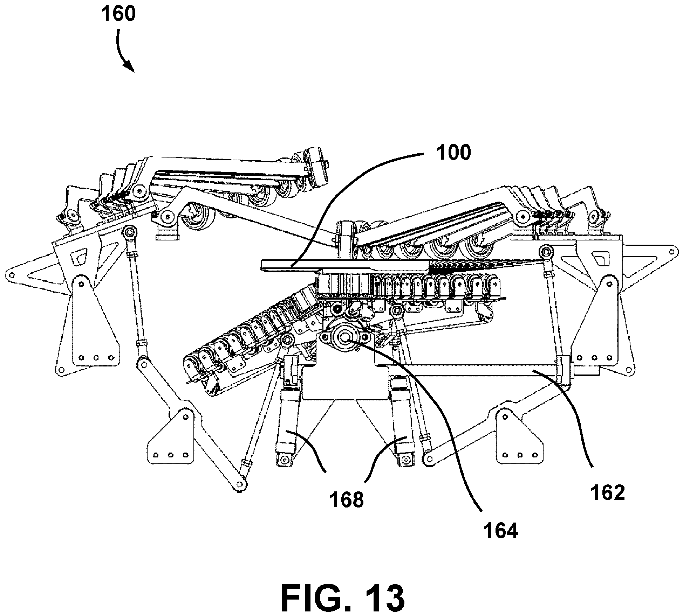

La figure 13 est une vue d'élévation montant l'extrémité du dispositif d'aiguillage de la figure 12.

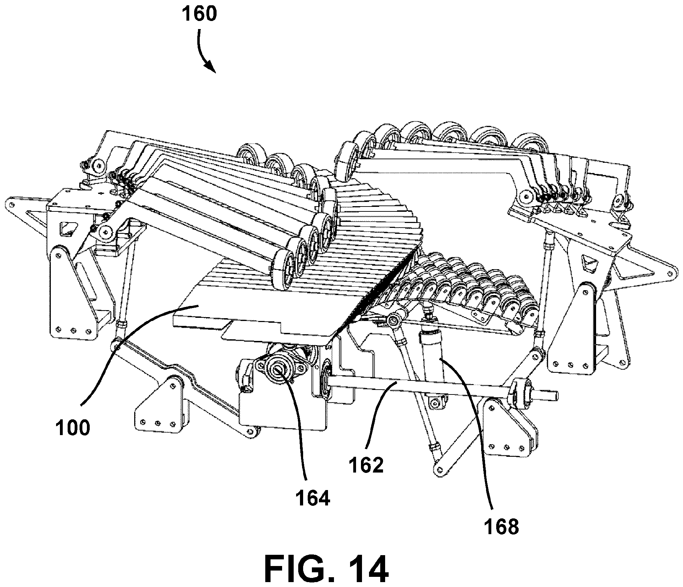

La figure 14 est une vue isométrique similaire à la figure 11 mais avec la partie supérieure du dispositif d'aiguillage.

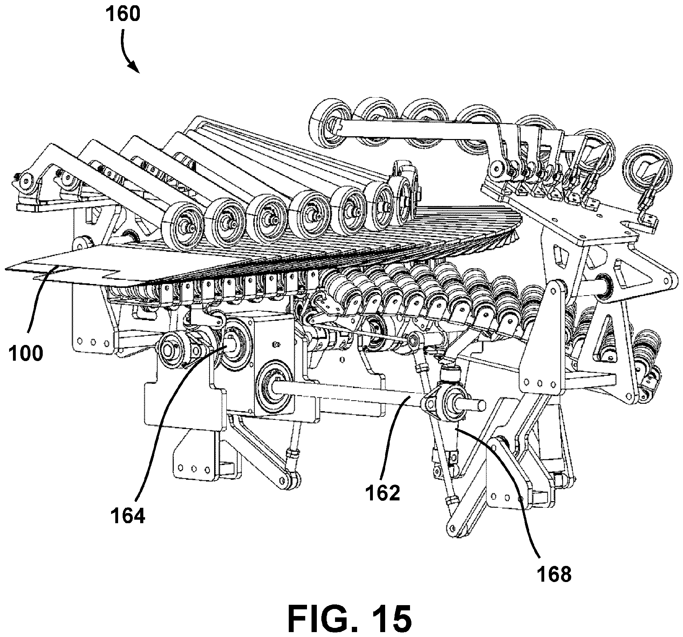

La figure 15 est une vue similaire à la figure 14 mais prise selon un autre angle.

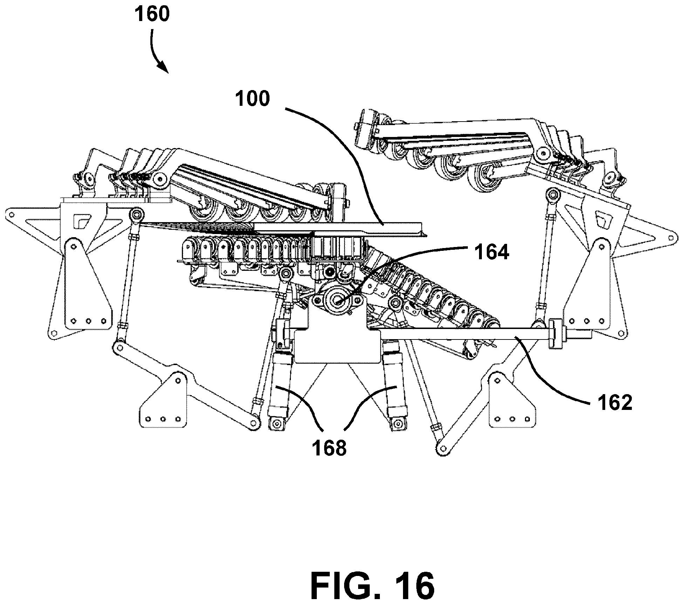

La figure 16 est une vue d'élévation montrant l'extrémité du dispositif d'aiguillage de la figure 14.

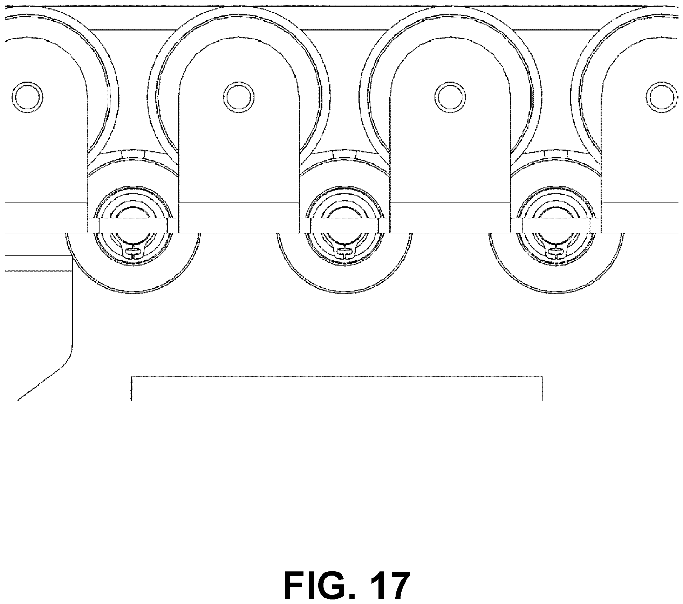

La figure 17 est une vue d'élévation montrant un exemple de configuration pour l'entraînement des rouleaux.

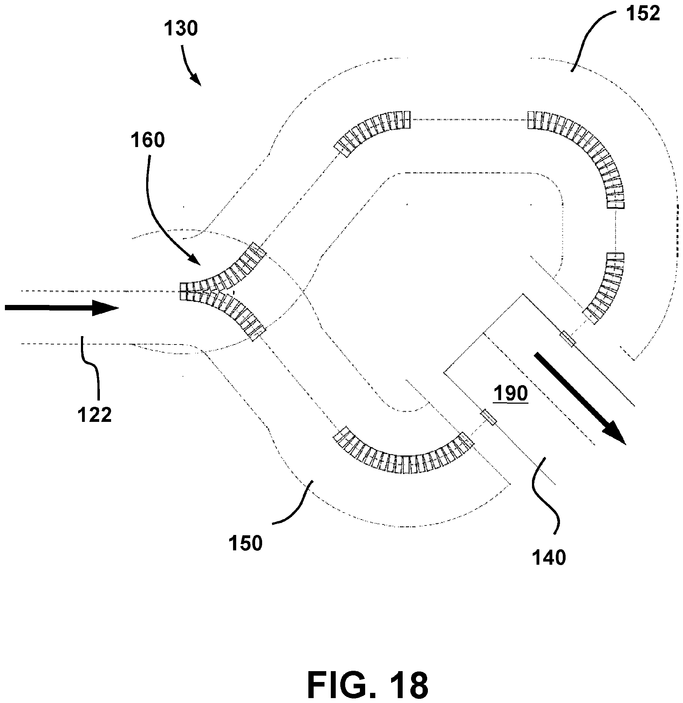

La figure 18 est une vue semi-schématique du dessus montrant une configuration du système dans laquelle la trajectoire des boîtes à la sortie n'est pas parallèle à la trajectoire d'entrée.

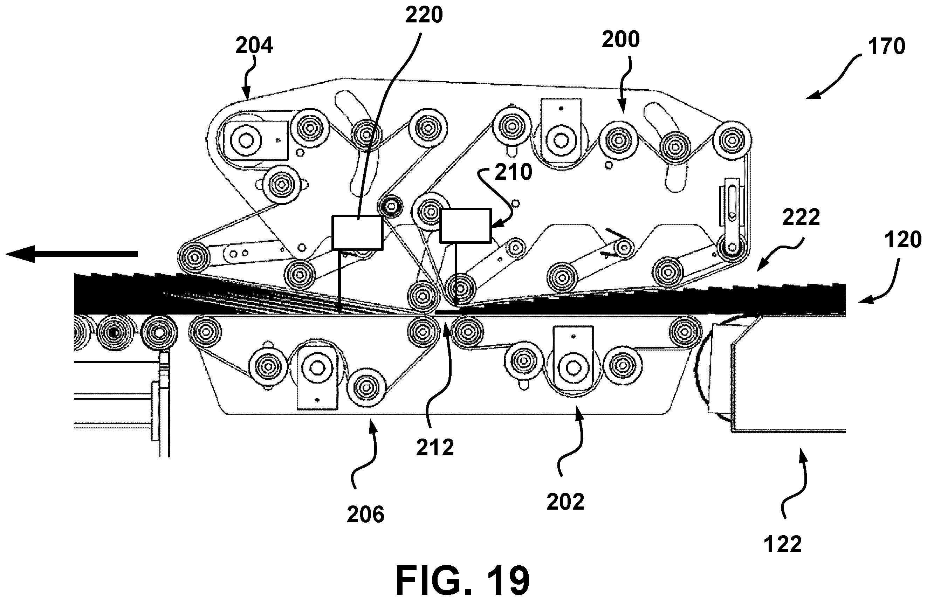

La figure 19 est une vue d'élévation montrant le côté gauche du dispositif de séparation des nappes utilisé dans le système de la figure 4.

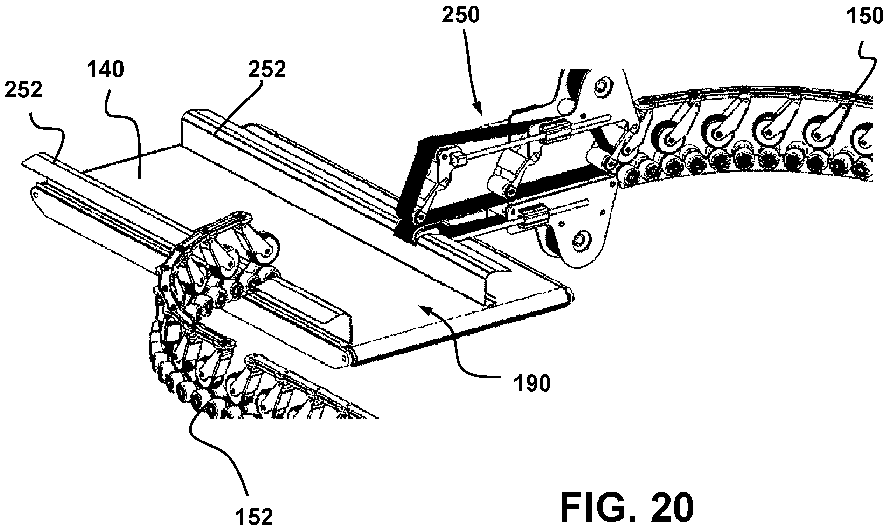

La figure 20 est une vue isométrique agrandie montrant les détails de la sortie du système de la figure 4.

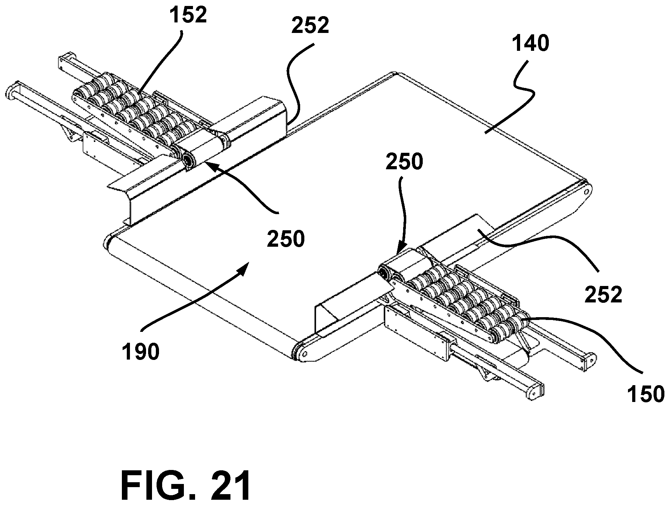

La figure 21 montre la zone commune de réception avec une section extensible de chaque côté en position ouverte maximale.

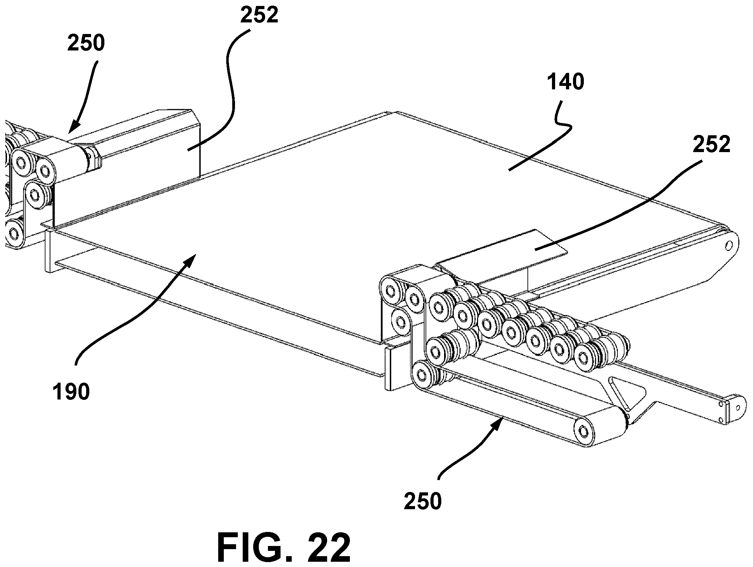

La figure 22 est une vue en coupe de ce qui est illustré à la figure 21.

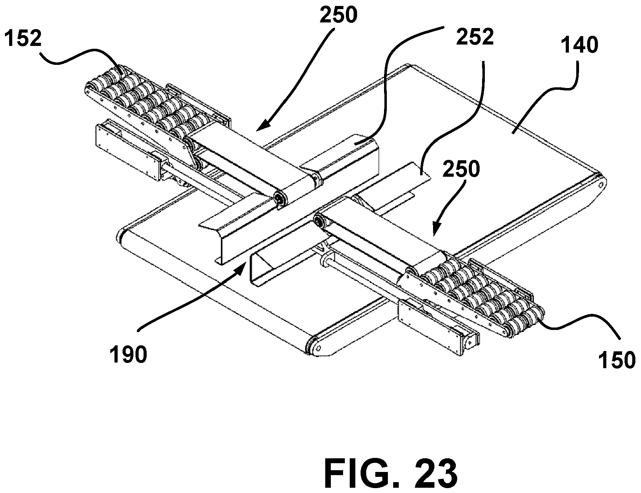

La figure 23 montre la zone commune de réception avec la section extensible de chaque côté en position ouverte minimale.

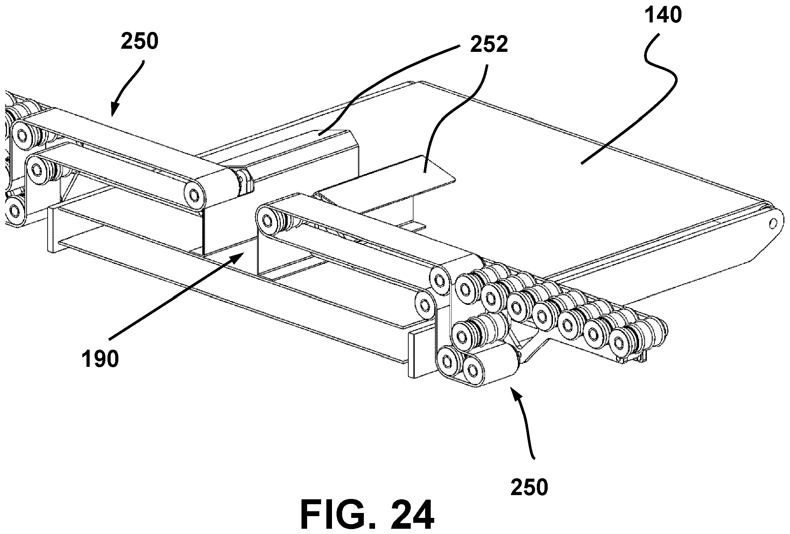

La figure 24 est une vue en coupe de ce qui est illustré à la figure 23.

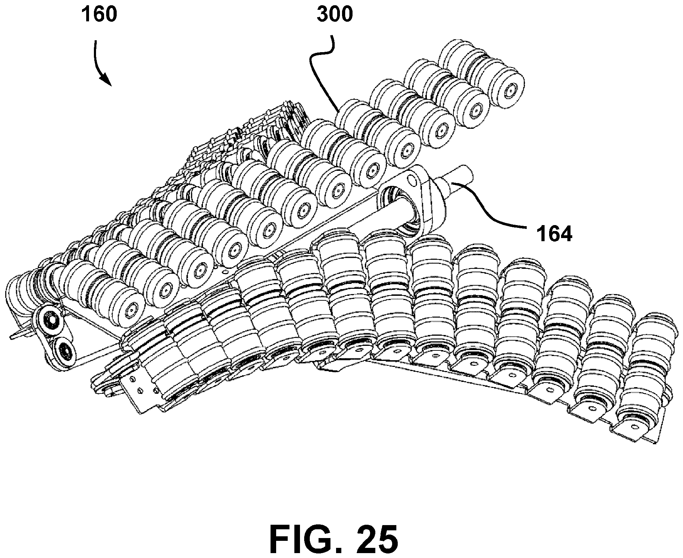

La figure 25 est une vue isométrique d'un exemple de dispositif d'aiguillage à trois voies.

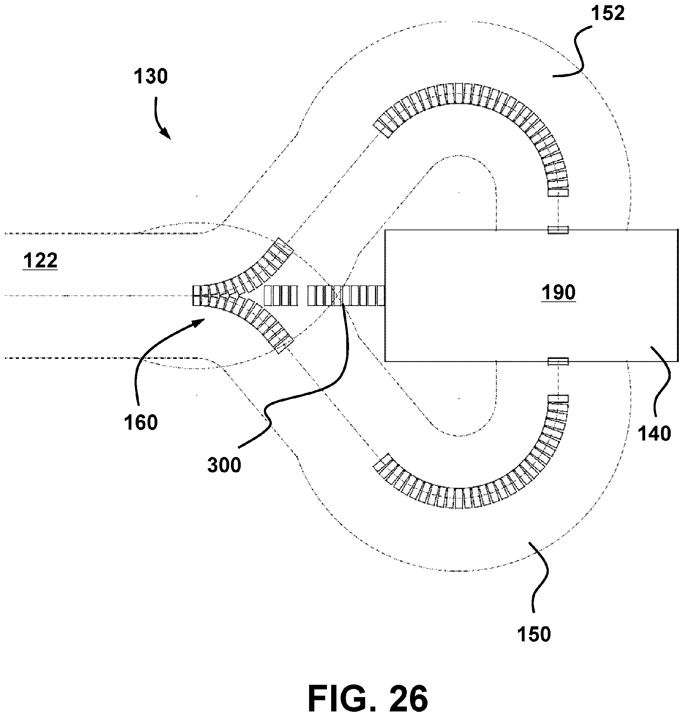

La figure 26 est une vue similaire à la figure 18 mais montrant un exemple d'une configuration du système avec un convoyeur central.

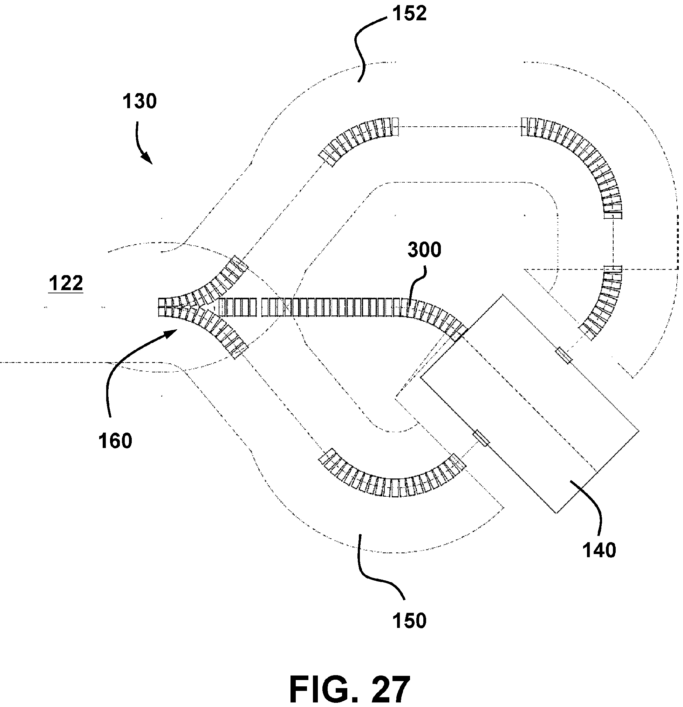

La figure 27 est également une vue similaire à la figure 18 mais montrant un autre exemple de configuration du système avec le convoyeur central.

### DESCRIPTION DÉTAILLÉE

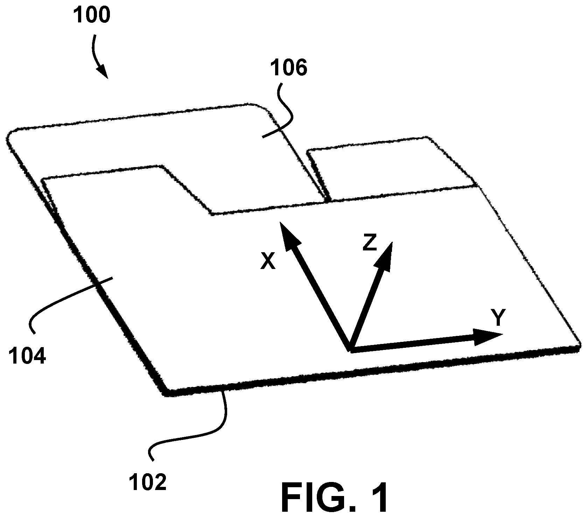

La figure 1 illustre un exemple d'un objet à plat, plus particulièrement une boîte pliante 100. La boîte 100 n'est qu'un exemple parmi une très vaste gamme de possibilités. Il est donc important de souligner que les objets à plat dont il est question ne se limitent pas qu'aux boîtes pliantes car d'autres types d'objets peuvent être avantageusement repositionnés en utilisant le concept proposé. Ces objets peuvent être faits en différents matériaux, par exemple en carton, en carton compact fort, en carton ondulé, en plastique semi-rigide, en carton avec microcannelures, etc. De plus, le fait que la majeure partie de la description détaillée ci-dessous présente les objets comme étant des boîtes, notamment des boîtes comme la boîte 100 de la figure 1, est uniquement pour simplifier le texte descriptif.

La boîte 100 choisie comme exemple est représentative d'un objet qui provient d'une plieuse-colleuse située en amont d'une ligne de production. La boîte 100 est alors dans une configuration plane, c'est-à-dire que les principaux panneaux de la boîte 100 sont repliés les uns sur les autres pour essentiellement éliminer tout le volume interne de chaque boîte et ainsi minimiser l'espace occupé avant sa première utilisation. La boîte 100, dans sa configuration plane, a une longueur, une largeur et une épaisseur. La longueur correspondant à l'axe X du système de coordonnées de la figure 1, la largeur correspondant à l'axe Y et l'épaisseur à l'axe Z. L'épaisseur est d'une dimension qui est significativement moindre que la longueur et la largeur. Lorsque la boîte 100 sera dépliée pour sa première utilisation, l'axe X sera orienté verticalement vers le haut. Entretemps, la boîte 100 conservera sa configuration plane. Les axes X et Y définissent le plan médian de la boîte 100. La boîte 100 a un profil qui est sensiblement rectangulaire mais comme montré à la figure 1, l'un ou plusieurs de ses côtés peuvent être non linéaires.

La boîte 100 choisie comme exemple a également une épaisseur variable dans sa configuration plane. L'épaisseur est plus importante le long du côté 102 et décroît vers le côté opposé au côté 102 dans le sens de l'axe X. Cette variation est causée, par exemple, par la présence d'un panneau de fond plié à l'intérieur des deux panneaux principaux, à savoir le panneau 104 et est le panneau 106 qui est situé en dessous. Nonobstant le fait que la boîte 100 (ou tout autre type d'objet) a une épaisseur variable, elle demeure quelque chose que l'on peut qualifier de plat dans le contexte. De plus, l'utilisation de boîtes ou de tout autre type d'objet à plat ayant une épaisseur constante (i.e. non variable) demeure toujours possible.

Selon les besoins, il est possible d'effectuer une inversion horizontale ou une inversion verticale de la boîte 100. Une inversion horizontale consiste à pivoter la boîte de 180 degrés autour de l'axe Z. Une inversion verticale consiste à pivoter la boîte de 180 degrés autour de l'axe X ou Y.

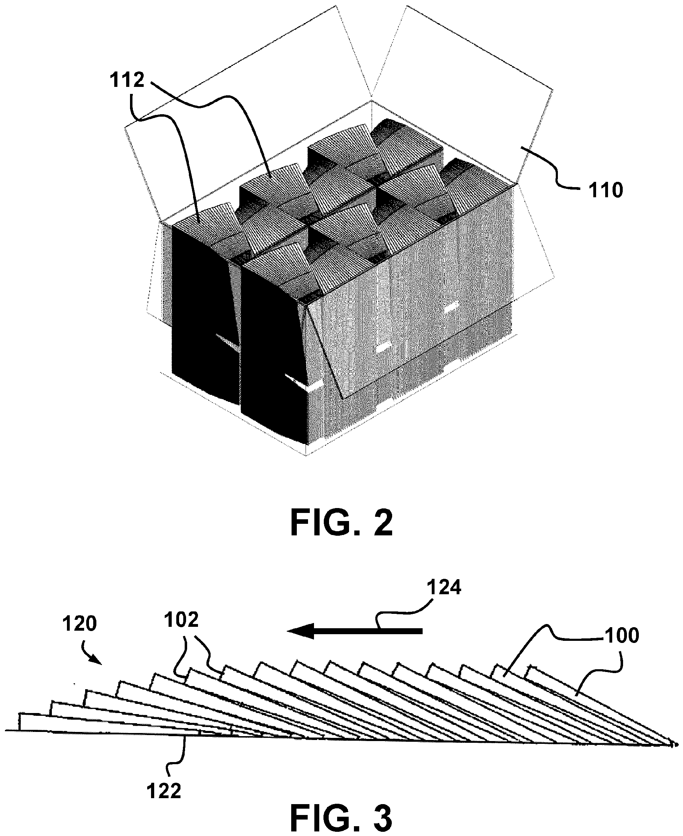

La figure 2 illustre un exemple d'un récipient 110 dans lequel est placé un lot de boîtes formé de plusieurs paquets 112, chaque paquet 112 comportant un nombre prédéterminé de boîtes superposées, par exemple des boîtes comme la boîte 100 de la figure 1. Les paquets 112 sont eux-mêmes superposés et placés transversalement à l'intérieur du récipient 110. Ce récipient 110 est, dans l'exemple, une large boîte servant au transport et au stockage des boîtes que contiennent les paquets 112 avant leur première utilisation. Ces boîtes, maintenant placées à l'intérieur du récipient 110, ont donc été préalablement sorties de la ligne de production. Dans le cas illustré, chaque paquet 112 contient des boîtes et qui sont superposées dans la même orientation. Les paquets 112 sont cependant orientés en alternance à l'intérieur du récipient 110 pour compenser la forme asymétrique de chaque paquet 112 et ainsi optimiser l'espace. Le récipient 110 peut ensuite être envoyé à une usine, à un magasin ou encore à tout autre endroit où il peut être utile de recevoir de telles boîtes.

La figure 3 est une vue de côté illustrant, de façon semi-schématique, des boîtes 100 en chevauchement en amont de l'endroit où ces boîtes 100 seront repositionnées. Dans cet exemple, il s'agit de boîtes 100 à la sortie d'une plieuse-colleuse. Les boîtes 100 forment alors une nappe, dite nappe initiale 120, et reposent sur la partie supérieure d'un convoyeur 122 qui est sensiblement linéaire et horizontal, dans ce cas-ci ayant la forme d'un tapis roulant. Les boîtes 100 sont toutes orientées dans le même sens les unes par rapport aux autres. Seule la première boîte 100 repose directement sur la surface du convoyeur 122, les autres boîtes 100 n'étant que partiellement en contact avec la surface du convoyeur 122 puisqu'elles chevauchent la boîte 100 précédente.

La nappe initiale 120 est illustrée comme étant discontinue, à savoir que la dernière boîte 100 de la nappe 120 est espacée de la boîte subséquente (non illustrée). Il est également possible d'avoir la nappe initiale en continu, selon le cas. La distance entre les boîtes chevauchantes d'une nappe, dans le sens de déplacement, est appelée « pas ». Le sens de déplacement est représenté par la flèche 124. Le pas peut être modifié au besoin.

La figure 3 montre également que le côté 102 de chaque boîte 100, laquelle a dans ce cas-ci une épaisseur variable. Le côté 102 de plus grande épaisseur se trouve vers le haut et est perpendiculaire du sens de déplacement 124. Chaque côté 102 forme alors le bord transversal antérieur de chaque boîte 100. L'épaisseur de chaque boîte 100 est décroissante vers le côté opposé. Ce côté opposé forme alors le bord transversal postérieur. Comme montré à la figure 1, le bord transversal antérieur n'est pas nécessairement droit et uniforme. La même chose s'applique au bord transversal antérieur, quoique ce bord soit souvent droit et uniforme en pratique.

La figure 4 est une vue isométrique d'un exemple d'un système de repositionnement 130 incorporant le concept proposé. Le système 130 comprend une entrée 132 et une sortie 134. L'entrée 132 est placée immédiatement en aval d'un convoyeur d'entrée, dans ce cas-ci le convoyeur d'entrée 122. La sortie 134 du système 130 se trouve directement au-dessus d'un convoyeur de sortie 140. Dans certaines mises en oeuvre, le convoyeur de sortie 140 pourrait être remplacé par une chute ou autre dispositif.

Le système 130 inclut un premier convoyeur de déviation latérale 150 et un deuxième convoyeur de déviation latérale 152. Dans ce cas-ci, le premier convoyeur de déviation latérale 150 est placé à la droite par rapport à la trajectoire d'entrée des boîtes et le deuxième convoyeur de déviation latérale 152 est placé à sa gauche. Les deux convoyeurs de déviation latérale 150, 152 ont chacun une entrée située en aval de l'entrée 132 du système 130 et une sortie qui est située immédiatement en amont de la sortie 134 du système 130.

Le système 130 inclut également un dispositif d'aiguillage 160 ayant une entrée et deux sorties distinctes, une pour chaque convoyeur de déviation latérale 150, 152. L'entrée du dispositif d'aiguillage 160 est alignée avec la trajectoire d'entrée des boîtes et chaque sortie du dispositif d'aiguillage 160 est située, une à la fois, à une position respective où sa sortie est immédiatement en amont de l'entrée du convoyeur de déviation latérale correspondant 150, 152. Le dispositif d'aiguillage 160 est donc placé immédiatement en amont des deux convoyeurs de déviation latérale 150, 152.

Le système 130 illustré dans l'exemple inclut également un dispositif de séparation 170 des nappes. Ce dispositif de séparation 170 est placé immédiatement à l'entrée 132 du système 130 et en aval de l'entrée du dispositif d'aiguillage 160. Le principal rôle du dispositif de séparation 170 est de créer un espace afin de discontinuer la nappe initiale 120 (figure 3). Cet espacement va alors permettre au dispositif d'aiguillage 160 de se replacer dans une position différente dès que la fin de la nappe précédente est passée sur l'un des deux convoyeurs de déviation latérale 150, 152.

Il est important de noter que dans certaines mises en oeuvre, la nappe initiale 120 pourrait être discontinue et avoir déjà l'espacement nécessaire. Dans ce cas, le dispositif de séparation 170 pourrait ne pas être requis.

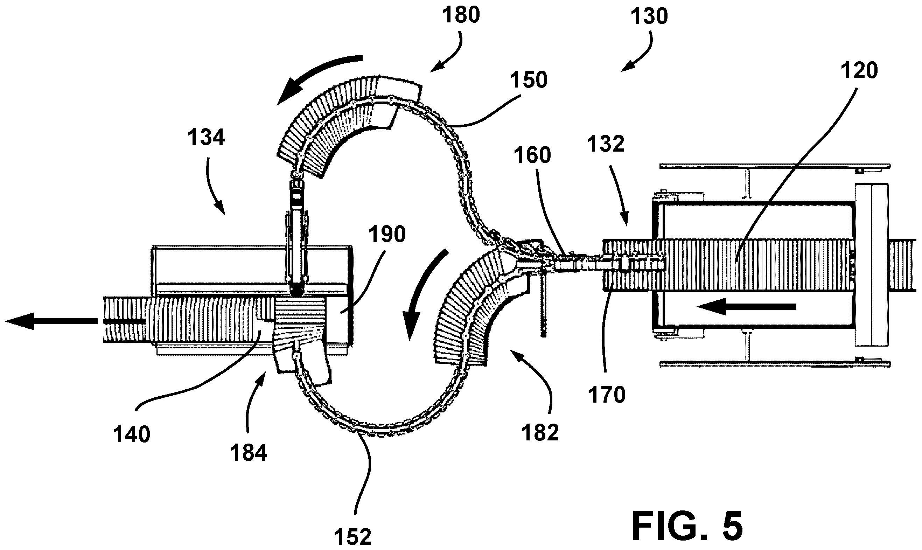

La figure 5 est une vue du dessus du système 130 de la figure 4. Le système 130 est représenté en cours d'utilisation. On peut y voir la nappe initiale 120 et des nappes de transit 180, 182, 184 en déplacement sur les deux convoyeurs de déviation latérale 150, 152. Les boîtes des nappes de transit 180, 182, 184 sont ensuite recombinées à la sortie 134 du système 130 dans une zone commune de réception 190. Cette zone commune de réception 190 se trouve immédiatement au-dessus du convoyeur de sortie 140 dans l'exemple.

Le premier convoyeur de déviation latérale 150 définit une première trajectoire de déviation ayant au moins un segment horizontal incurvé. Le deuxième convoyeur de déviation latérale 152 définit une deuxième trajectoire de déviation ayant au moins un segment horizontal incurvé. Dans l'exemple, les deux trajectoires de déviation sont dans le plan horizontal. Les boîtes 100 sont alors guidées et supportées par le haut et par le bas. Le plan médian de chaque boîte 100 demeure sensiblement intégral tout le long du parcours. Chaque boîte 100 ne subit donc aucune flexion, ce qui est très avantageux pour la manutention d'objets à plat faits d'un matériau inflexible.

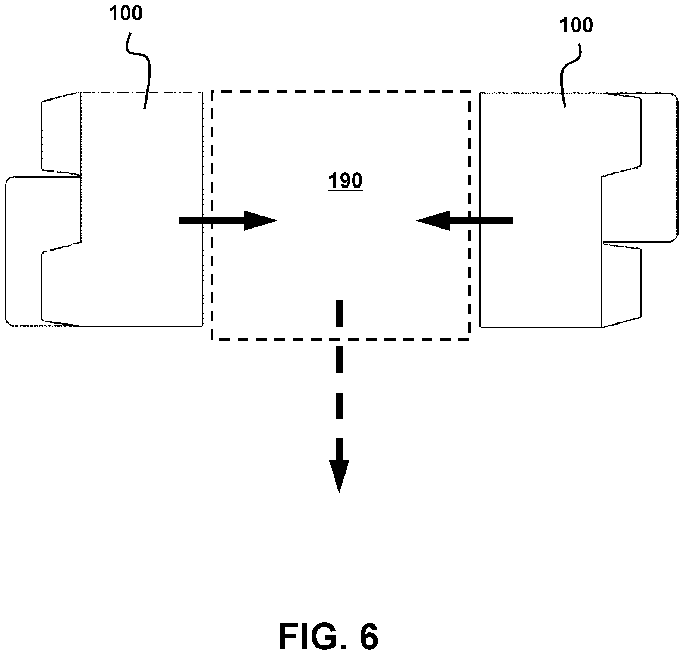

La figure 6 est une vue semi-schématique de la zone commune de réception 190 du système 130 de la figure 4. Comme on peut le constater, les deux trajectoires de déviation ont, aux sorties des convoyeurs de déviation latérale 150, 152, des directions qui sont sensiblement parallèles et diamétralement opposées l'une par rapport à l'autre. La sortie du premier convoyeur de déviation latérale 150 est située sur le côté droit d'une zone commune de réception 190. La sortie du deuxième convoyeur de déviation latérale 152 est située sur le côté gauche de la zone commune de réception 190.

Il est à noter qu'à la figure 6, les boîtes 100 sont représentées comme étant admises dans la zone commune de réception 190 des deux côtés en même temps. La figure 6 n'est cependant qu'une vue explicative et lors de l'utilisation du système 130, les boîtes 100 ne sont admises que d'un seul côté à la fois afin d'éviter les collisions entre les boîtes 100. Comme cela est montré à la figure 5, les boîtes 100 d'une nappe de transit sont déposées tour à tour sur le convoyeur de sortie 140 afin de créer une nappe de sortie constituée de boîtes en chevauchement latéral. La première des boîtes 100 de la nappe de transit 180 arrivera après la dernière boîte de la nappe de transit 184.

Le dispositif d'aiguillage 160 placé immédiatement en amont des entrées des convoyeurs de déviation latérale 150, 152 permet de créer de façon séquentielle, entre l'entrée 132 et la sortie 134 du système 130, un premier circuit de transport passant par la première trajectoire de déviation et se terminant du côté droit de la zone commune de réception 190. Il permet aussi de créer un deuxième circuit de transport passant par la deuxième trajectoire de déviation et se terminant du côté gauche de la zone commune de réception 190. De cette façon, le système 130 permet d'inverser l'orientation des boîtes 100 qui auront été transportées dans le premier circuit de transport par rapport aux boîtes 100 qui auront été transportées dans le deuxième circuit de transport. Les boîtes 100 auront ainsi une orientation inversée à 180 degrés selon qu'elles sont passées par la droite ou par la gauche. Leur sens de déplacement est aussi pivoté de 90 degrés puisque le côté 102 de chaque boîte 100, lequel côté était le bord transversal antérieur dans la nappe initiale 120, se trouve maintenant sur le bord longitudinal droit ou gauche par rapport à la trajectoire de sortie.

La figure 4 montre que tout le long des deux circuits de transport à l'intérieur du système 130, les boîtes 100 sont toujours supportées dans le haut et dans le bas. Cela permet de guider les boîtes 100 en tout point. Ce guidage se fait par des rouleaux et par des courroies, selon l'endroit.

La figure 7 est une vue isométrique de la partie inférieure du dispositif d'aiguillage 160 du système 130 de la figure 4. Le dispositif d'aiguillage 160 est illustré dans une première position. Il est à noter que la partie supérieure n'est pas représentée afin de ne pas alourdir inutilement la vue. Cette partie supérieure est cependant visible dans d'autres figures.

La première position du dispositif d'aiguillage 160 correspond à celle où les boîtes 100 de la nappe initiale 120 sont dirigées vers la droite dans l'exemple. La trajectoire d'entrée des boîtes, qui était initialement linéaire, subit un point d'inflexion vers la droite. Dans l'exemple, comme déjà indiqué, la première trajectoire de déviation est dans le plan horizontal.

La partie inférieure du dispositif d'aiguillage 160 du système 130 comprend une série de rouleaux dont l'axe de rotation est transversal à la trajectoire d'entrée des boîtes 100. Les axes de ces rouleaux sont parallèles sur une certaine distance à l'entrée du dispositif d'aiguillage 160. Par la suite, seules les moitiés à droite de certains rouleaux sont en position. Les moitiés de gauche sont alors temporairement positionnées plus bas. Les axes de rotation des moitiés de droite sont décalés de façon angulaire pour créer le point d'inflexion vers la droite. Plus loin, lorsque la trajectoire est nettement tangente à la trajectoire d'entrée, les rouleaux retrouvent leur pleine largeur et le dispositif d'aiguillage 160 se termine en une sortie dite à droite. Cette sortie à droite est alors alignée avec l'entrée du convoyeur de déviation latéral 150 qui est à droite. Ce convoyeur a une construction similaire pour la majeure partie du trajet.

La figure 7 montre l'arbre de transmission 162 servant à transmettre le couple pour l'entraînement des rouleaux. L'arbre de transmission 162 est entraîné par un moteur (non illustré). On peut aussi voir l'axe principal de pivot 164 du cadre mobile 166 sur lequel les rouleaux sont montés. Ce cadre 166 pivote autour de l'axe de pivot 164 pour passer de la première position à la deuxième position, et vise et versa. La deuxième position est celle où le dispositif d'aiguillage 160 guidera les boîtes 100 d'une nappe de transit vers la gauche. Dans l'exemple, des vérins 168 servent à faire pivoter le cadre mobile 166 par rapport à une base fixe. Les rouleaux vers la droite et les rouleaux vers la gauche sont montés sur le même cadre mobile 166.

La figure 8 est une vue isométrique de la partie inférieure du dispositif d'aiguillage 160 du système 130 de la figure 4. Le dispositif d'aiguillage 160 est illustré dans la deuxième position. Cette vue est similaire à la figure 7, à l'exception de la position. La partie supérieure du dispositif d'aiguillage 160 aura aussi été pivotée pour placer des rouleaux sur le dessus des boîtes 100 afin d'en assurer le guidage optimal, particulièrement dans les courbes.

La figure 9 est une vue d'élévation montrant le côté latéral de la partie inférieure du dispositif d'aiguillage 160 de la figure 7.

La figure 10 est une vue similaire à la figure 7 mais avec un exemple d'une nappe de boîtes 100 envoyée vers le côté droit. La figure 11 montre des boîtes 100 qui tournent vers la droite pour se diriger vers le convoyeur de déviation latérale 150 à droite. Le pivotement des boîtes 100 s'effectue autour de l'axe Z (figure 1). À l'exception de la boîte en tête des nappes de transit, chaque boîte 100 tourne sur la boîte précédente. Les boîtes 100 ne se trouvent pas fléchies. Elles demeurent en position avec la friction des rouleaux et aussi une pression exercée vers le bas par les rouleaux du haut. Les rouleaux du bas sont entraînés en rotation tout au long du circuit et synchronisé, ce qui permet de conserver le pas entre les boîtes 100 d'une même nappe de transit.

La figure 11 est une vue similaire à la figure 10 mais avec un exemple d'une nappe de boîtes 100 envoyée vers le côté gauche.

La figure 12 est une vue isométrique similaire à la figure 10 mais avec aussi la partie supérieure du dispositif d'aiguillage 160. La figure 12 montre les différents mécanismes de liaison entre la partie inférieure et la partie supérieure des dispositifs d'aiguillage 160.

La figure 13 est une vue d'élévation montant l'extrémité du dispositif d'aiguillage 160 de la figure 12.

La figure 14 est une vue isométrique similaire à la figure 11 mais avec la partie supérieure du dispositif d'aiguillage 160.

La figure 15 est une vue similaire à la figure 14 mais prise selon un autre angle.

La figure 16 est une vue d'élévation montrant l'extrémité du dispositif d'aiguillage 160 de la figure 14.

La figure 17 est une vue d'élévation montrant un exemple de configuration pour l'entraînement des rouleaux. Cette vue est par exemple une représentation agrandie de la partie inférieure à l'entrée du dispositif d'aiguillage 160. L'entraînement des rouleaux peut être réalisé par une courroie de section circulaire qui zigzag en alternance entre la surface supérieure des rouleaux et la surface inférieure de roues intermédiaires. Cet agencement peut être semblable par exemple à celui présenté dans le document EP 1 832 531.

La figure 18 est une vue semi-schématique du dessus montrant une configuration du système 130 dans laquelle la trajectoire des boîtes à la sortie 134 du système 130 n'est pas aligné ni même parallèle à la trajectoire d'entrée. Le premier convoyeur de déviation latérale 150 est donc plus court que le deuxième dans cet exemple. Il est alors possible de compenser cette variation de la longueur en modifiant la vitesse de déplacement des nappes de transit. D'autres mises en oeuvre sont également possibles. L'exemple montré à la figure 18 illustre bien la souplesse que permet le système 130. Il n'est donc plus nécessaire d'avoir la trajectoire de sortie en parallèle de la trajectoire d'entrée. Néanmoins, les boîtes 100 seront quand même repositionnées de façon inversée à la sortie du système 130. La somme de l'angle de pivotement des boîtes 100 passant par le premier circuit de transport et la somme de l'angle de pivotement des boîtes 100 passant par le deuxième circuit de transport sera de 180 degrés.

La figure 19 est une vue d'élévation montrant le côté gauche du dispositif de séparation 170 utilisé dans le système de la figure 4. Ce dispositif de séparation 170 inclut une section d'entrée et une section de sortie, chacune ayant une courroie inférieure et supérieure correspondante. Les courroies de la section d'entrée opèrent à une vitesse variable afin d'alimenter les boîtes 100 en direction de la section de sortie. Les courroies de la section de sortie opèrent également à une vitesse variable mais avec une vitesse maximale supérieure.

La motorisation des courroies doit permettre des accélérations et décélérations rapides durant les phases de séparation. La vitesse de pointe durant l'accélération est généralement de l'ordre de 5 à 8 fois la vitesse du convoyeur d'entrée 122 et doit être atteinte typiquement entre 100 et 200 m/s. Cette motorisation est souvent effectuée à l'aide de servomoteurs. D'autres mises en oeuvre sont également possibles. Le dispositif de séparation 170 permet de créer les nappes de transit et un espacement entre elles. Cet espacement donne le temps au dispositif d'aiguillage 160 de se déplacer entre les deux positions, par exemple à l'aide d'un ou de plusieurs vérin qui actionnent à la fois la partie inférieure et la partie supérieure. La course de pivotement est conçue pour être la plus courte possible afin de réduire au maximum le temps nécessaire pour passer entre les deux positions. De plus, seule une partie en aval de l'entrée du dispositif d'aiguillage 160 est déplacée car les deux circuits ont une entrée commune dans l'exemple illustré. Il est alors possible de commencer à admettre une nappe de transit même si le pivotement du cadre mobile 166 n'est pas encore terminé. Cela permet un changement d'orientation plus rapide et une vitesse de pointe plus grande puisqu'elle peut être prête avant que les boîtes 100 n'entrent dedans.

Le dispositif de séparation 170 est formé par une section d'entrée avec courroie supérieure 200 et inférieure 202 et par une section de sortie avec courroie supérieure 204 et inférieure 206. L'entrée et la sortie sont entraînées par une motorisation indépendante. Les courroies supérieures 200, 204 et inférieures 202, 206 de chaque section sont de préférence reliées mécaniquement. Un capteur de comptage des boîtes 210 est situé en amont de la zone de séparation 212.

Les poulies qui supportent les courroies supérieures 200, 204 dans leur portion qui se trouve directement au-dessus des boîtes sont montées autour de bras pivotants pour permettre de suivre les changements de hauteur de la nappe initiale 120. Les bras sont également conçus pour exercer une force vers le bas, par exemple à l'aide de ressorts calibrés ou de vérins ajustables en pression. Les forces sont prévues pour retenir suffisamment les boîtes mais sans abîmer celles-ci. Les forces sont généralement plus grandes dans la section de sortie. Les courroies supérieures 200, 204 sont aussi supportées par des poulies avec un mécanisme de tendeur pour compenser les variations de la longueur en cours d'utilisation. De plus, la première poulie de la courroie d'entrée 200, laquelle poulie est située directement en haut de la zone d'entrée du dispositif de séparation 170 illustré à la figure 19, est ajustable en hauteur pour contrôler la phénomène d'accumulation des boîtes en répartissant la réduction du pas entre les boîtes sur plusieurs boîtes successives. Cela permet d'éviter la superposition complète de certaines boîtes. La hauteur de la poulie peut être ajustée en fonction de la hauteur de la nappe initiale 120.

La séquence de séparation commence par un fonctionnement où les courroies d'entrés 200, 202 tournent à même vitesse que les courroies de sorties 204, 206. Cette vitesse est typiquement la même que la vitesse d'entrée de la nappe initiale 120 sur le convoyeur d'entrée 122. La vitesse peut être ajustée pour être plus rapide ou plus lente que celle du convoyeur d'entrée 122 afin d'augmenter ou réduire le pas de la nappe initiale 120 et en faciliter la séparation par paquets ou le comptage. Le pas optimal est souvent de 25 mm au plus. Plus le pas est grand, plus la séparation est faible. La distance entre le capteur 210 et la zone de séparation 212 peut influencer le comptage des boîtes 100. Le logiciel servant à contrôler le dispositif de séparation 170 peut faire une compensation si la distance est connue.

Lorsque la valeur de comptage pour le paquet en cours est atteinte, les courroies d'entrée 200, 202 s'arrêtent et les courroies de sortie 204, 206 accélèrent entre cinq et huit fois la vitesse du convoyeur d'entrée 122. Les boîtes 100 qui sont dans la zone de séparation 212 et qui ne sont pas en contact avec les courroies de sortie sont maintenues en arrêt par les courroies d'entrée. Les boîtes 100 qui sont pincées entre les courroies de sortie sont accélérées et séparées de la nappe initiale 120 maintenue en arrêt dans la section de courroies d'entrée 200, 202. L'arrêt des courroies d'entrée 200, 202 doit être assez rapide pour éviter qu'une boîte supplémentaire puisse être prise par les courroies de sortie 204, 206. La distance d'arrêt est généralement de l'ordre de 5 à 10 cm. D'autres valeurs sont possibles.

Lorsque le capteur 220 détecte la fin de la dernière boîte 100 du paquet séparé, les courroies d'entrée 200, 202 redémarrent à leur vitesse de fonctionnement en proportion avec la vitesse du convoyeur d'entrée 122 et les courroies de sorties 204, 206 ralentissent à la même vitesse que les courroies d'entrée 200, 202. La distance d'arrêt des courroies d'entrée 200, 202 est idéalement toujours la même pour toutes les vitesses afin que la séparation soit faite de la même façon.

La distance entre la zone de séparation 212 et le capteur de séparation de paquets 220 affecte directement la longueur de séparation entre les paquets. Plus la séparation est longue, plus le dispositif d'aiguillage 160 a de temps pour changer de position entre deux paquets et vice et versa. Par contre, plus la séparation est longue, plus la section d'entrée est arrêtée longtemps, ce qui peut occasionner une accumulation de boîtes 100 à l'entrée 222 parce que le convoyeur d'entrée 122 continue de faire avancer la nappe initiale 120. Tous les systèmes subséquents permettent cette variation d'épaisseur de nappe causée par l'accumulation de boîtes, par contre si cette accumulation est trop grande, il peut y avoir chevauchement complet des boîtes 100 à l'entrée 222, ce qui causerait une erreur de comptage par le capteur 210.

La figure 20 est une vue isométrique agrandie montrant les détails de la sortie 134 du système 130 de la figure 4.

Dans l'exemple illustré, le premier convoyeur de déviation latérale 150 se termine par une section extensible 250 pour permettre l'ajustement de la distance entre deux guides de sortie 252 en fonction de la largeur des boîtes 100 selon l'axe X, lequel correspond au sens de déplacement des boîtes 100 dans le convoyeur de déviation latérale 150. Chaque guide 252 est disposé de façon longitudinale de chaque côté du convoyeur de sortie 140. Le guide 252 à droite est soutenu par la section extensible 250 au-dessus de la surface.

Selon la mise en oeuvre souhaitée, chaque convoyeur de déviation latérale 150, 152 peut se terminer par une section extensible 250 pour permettre le centrage des boîtes 100 dans la zone commune de réception 190 du système 130.

Ces sections extensibles 250 ont une construction différente de celle montrée à la figure 20.

La figure 21 montre la zone commune de réception 190 avec une section extensible 250 de chaque côté en position ouverte maximale. Ces sections extensibles 250 ont une construction différente de celle montrée à la figure 20. Seule la partie inférieure des sections extensibles 250 est illustrée pour les besoins de l'exemple.

La figure 22 est une vue en coupe de ce qui est illustré à la figure 21.

La figure 23 montre la zone commune de réception 190 avec la section extensible 250 de chaque côté en position ouverte minimale.

La figure 24 est une vue en coupe de ce qui est illustré à la figure 23.

Chaque section extensible 250 comporte une courroie extensible et un mécanisme pour faire varier la longueur exposée.

Dans certaines mises en oeuvre, il peut être avantageusement de prévoir un convoyeur central 300 ajouté entre les deux convoyeurs de déviation latérale 150, 152. Ce convoyeur central 300 permet alors de passer la nappe initiale 120 tout droit, donc directement dans la zone commune de réception 190. Le dispositif de séparation 170 peut encore être utilisé pour créer des paquets lorsque cela est nécessaire. Le dispositif d'aiguillage 160 va comprendre une troisième voie de sortie pour permettre de diriger les boîtes 100 sur le convoyeur central 300.

La figure 25 est une vue isométrique du dispositif d'aiguillage 160 à trois voies.

La figure 26 est une vue similaire à la figure 18 mais montrant un exemple d'une configuration du système 130 avec le convoyeur central 300.

La figure 27 est également une vue similaire à la figure 18 mais montrant un autre exemple de configuration du système 130 avec le convoyeur central 300.

Il est à noter que si nécessaire, le système 130 peut servir à repositionner des boîtes 100 par l'un des deux convoyeurs de déviation latérale 150, 152 seulement. L'autre n'est alors pas utilisé. Cette possibilité pourrait être intéressante si l'inversion des boîtes 100 les unes par rapport aux autres n'est pas requise dans certains cas. L'indexation des boîtes 100 entre l'entrée 132 et la sortie 134 du système 130 est une indexation à droite seulement ou une indexation à gauche seulement, selon le convoyeur de déviation latéral utilisé. Il est également possible de prévoir un dispositif de retournement hélicoïdal afin de réaliser un repositionnement des boîtes 100 une à une par un pivotement autour de l'axe X et/ou Y (figure 1).

La fabrication du système 130 peut s'effectuer par des moyens connus d'assemblage de ses différents éléments constitutifs. Ces moyens connus d'assemblage peuvent inclure par exemple au moins l'une des techniques suivantes : le soudage, le vissage, l'emboîtage, le collage, le sertissage, le rivetage, le plaquage.

Comme on peut le constater, le concept présenté propose un système d'inversion des paquets multidirectionnel et polyvalent pour séparer et inverser des paquets d'objets, par exemple des boîtes pliantes, dans différentes orientations. Le système peut permettre aussi l'indexation de nappe en continu ou en paquets dans une ou plusieurs directions par un simple réglage. Il peut également permettre, par simple réglage, plusieurs orientations de paquets en utilisant une ou des sections dynamiques de retournement des objets.

Selon la mise en oeuvre souhaitée, le système d'inversion des paquets peut comprendre:
- au moins un système d'inversion hélicoïdal pour le retournement à 180 degrés d'objets individuels dans l'une des branches de transport, lequel système d'inversion hélicoïdal étant composé d'une courroie torsadée de 180 degrés non soutenue dans sa section de transport entre les deux extrémités, lequel système d'inversion hélicoïdal étant fixe à chaque extrémité et permettant seulement le retournement à 180 degrés des objets individuels sans pouvoir passer tout droit;
- au moins un système d'inversion hélicoïdal pour le retournement à 180 degrés d'objets individuels dans l'une des branches de transport, lequel système d'inversion hélicoïdal étant composé d'une courroie torsadée de 180 degrés non soutenue dans sa section de transport entre les deux extrémités, lequel système d'inversion hélicoïdal étant dynamique à une extrémité et permettant le retournement à 180 degrés des objets individuels autant que le passage tout droit selon le réglage voulu;
- au moins un dispositif d'aiguillage transversal, lequel dispositif d'aiguillage transversal permettant autant le passage de nappe d'objets que le passage d'objets individuels, lequel dispositif d'aiguillage comprenant deux jeux de section supérieure et inférieure montés sur des axes de pivots activés par un seul actuateur, chacun des jeux de sections supérieure et inférieure ayant deux positions possibles, soit ouvert ou fermé, chacun des jeux de sections supérieure et inférieure étant dans la position opposée de l'autre jeu;

- un dispositif de séparation individuelle des objets composé d'un convoyeur et d'une ou plusieurs roues de pressions appuyant sur la nappe d'entrée, chacune des roues de pression pouvant être déplacée de sorte que sa position soit fonction de la largeur de l'objet pour avoir une séparation effective; et/ou
- un dispositif de transfert à l'équerre composé par exemple d'une section de convoyeur fixe et d'une section de convoyeur ajustable selon les dimensions de l'objet, la section de convoyeur ajustable étant composée d'une courroie extensible permettant une entrée fixe du côté de la section de transport et une sortie ajustable du côté du transfert à l'équerre.

Il est également proposé un procédé pour fabriquer un système comme décrit précédemment, consistant en l'assemblage des éléments constitutifs par des moyens connus.

L'utilisation du système peut permettre par exemple de séparer et inverser des paquets d'objets dans une ou plusieurs orientations réglables; et/ou permettre le fonctionnement en séparation/inversion de paquets ou en indexation de nappe/paquets par un simple réglage.

Un tel système (et/ou applications) présente au moins un des avantages suivant :
- de permettre le retournement de paquets d'objets à plat sans plier ni déformer aucun objet;
- de pouvoir combiner plusieurs fonctionnalités de transformation d'une nappe d'objets à plat dans un même système afin de réduire l'espace nécessaire sur un plancher.

Les fonctionnalités peuvent se décrire par exemple par :
- permettre d'effectuer une séparation de nappe d'objets à plat en paquets; et/ou
- permettre d'effectuer une séparation de nappe d'objets à plat en objets individuels distancés les uns des autres; et/ou
- permettre d'aiguiller les nappes d'objets à plat, les paquets d'objets à plat ou les objets à plat individuels dans différents branches de transport sans plier ni déformer aucun objet à plat; et/ou
- permettre de transporter les nappes d'objets à plat, les paquets d'objets à plat ou les objets à plat individuels dans des sections courbes afin de changer leur orientation; et/ou
- permettre de transférer à l'équerre de nappes d'objets à plat, de paquets d'objets à plat ou d'objets à plat individuels; et/ou
- permettre de retourner hélicoïdalement d'objets à plat individuels; et/ou
- permettre de recombiner les paquets d'objets à plat ou d'objets à plat individuels en une nappe continue d'objets à plat conditionnée dans une configuration différente que celle de la nappe d'objets à plat à l'entrée.

Le système peut aussi être défini en tant qu'un système de traitement d'objet à plat disposés en nappe initiale en mouvement, ce système comprenant : un dispositif de séparation de la nappe initiale en mouvement par paquets d'objets, un dispositif d'aiguillage des paquets dans des branches de transport, au moins un dispositif de rotation des objets d'un paquet autour d'un axe perpendiculaire au plan dudit paquet; et au moins un dispositif de recombinaison des paquets en une nappe reconstituée de paquets d'objets inversés; les mouvements des paquets se faisant sensiblement dans le même plan que celui de la nappe initiale ou dans des plans sensiblement parallèles au plan de la nappe initiale. Les procédé de fabrication d'un tel système et l'utilisation du système pour réaliser de nombreuses fonctions automatisées, telles que la séparation de la nappe initiale en mouvement par paquets d'objets, l'aiguillage des paquets dans les branches de transport, la rotation d'objets en paquet autour d'un axe perpendiculaire au plan d'un paquet, le retournement d'au moins un objet d'un paquet par rapport à l'axe X ou Y ou une combinaison des deux, la recombinaison de paquets en une nappe reconstituée de paquets d'objets inversés et la rotation en continue de la nappe initiale dans une ou l'autre des branches de transports, font aussi parties de ce qui est proposé.

La présente description détaillée et les figures correspondantes ne sont que des exemples. Une personne oeuvrant dans le domaine saura reconnaître que des variantes peuvent y être apportées tout en restant dans le cadre des revendications annexées.

### NUMÉROS DE RÉFÉRENCE

- 100: boîte
- 102: côté
- 104: panneau principal
- 106: panneau principal
- 110: récipient
- 112: paquet
- 120: nappe initiale
- 122: convoyeur d'entrée
- 124: sens de déplacement
- 130: système de repositionnement
- 132: entrée du système
- 134: sortie du système
- 140: convoyeur de sortie
- 150: premier convoyeur de déviation latérale
- 152: deuxième convoyeur de déviation latérale
- 160: dispositif d'aiguillage
- 162: arbre de transmission
- 164: axe principal de pivot
- 166: cadre mobile
- 168: vérin
- 170: dispositif de séparation
- 180: nappe de transit
- 182: nappe de transit
- 184: nappe de transit
- 190: zone commune de réception
- 200: courroie supérieure (section d'entrée du dispositif de séparation)
- 202: courroie inférieure (section d'entrée du dispositif de séparation)
- 204: courroie supérieure (section de sortie du dispositif de séparation)
- 206: courroie inférieure (section de sortie du dispositif de séparation)
- 210: capteur de comptage des boîtes
- 212: zone de séparation
- 220: capteur de séparation de paquets
- 222: entrée
- 250: section extensible
- 252: guide de sortie
- 300: convoyeur central

## Revendications

1. Un système (130) pour repositionner des objets à plat (100) et pouvant être disposés en chevauchement à une entrée (132) du système (130), les objets (100) ayant tous une même orientation initiale les uns par rapport aux autres le long d'une trajectoire d'entrée (124) qui est sensiblement linéaire et horizontale, le système (130) incluant :
un premier convoyeur de déviation latérale (150) et un deuxième convoyeur de déviation latérale (152), chacun ayant une entrée située en aval de l'entrée (132) du système (130) et une sortie qui est située immédiatement en amont d'une sortie (134) du système (130), le premier convoyeur de déviation latérale (150) définissant une première trajectoire de déviation ayant au moins un segment horizontal incurvé et le deuxième convoyeur de déviation latérale (152) définissant une deuxième trajectoire de déviation ayant au moins un segment horizontal incurvé, la sortie du premier convoyeur de déviation latérale (150) et la sortie du deuxième convoyeur de déviation latérale (152) étant espacées latéralement l'une de l'autre et situées respectivement sur un côté droit et un côté gauche d'une zone commune de réception (190) située à la sortie (134) du système (130), les deux trajectoires de déviation ayant, aux sorties des convoyeurs de déviation latérale (150, 152), des directions qui sont sensiblement parallèles et diamétralement opposées l'une par rapport à l'autre; et
un dispositif d'aiguillage (160) ayant une entrée et deux sorties distinctes, une pour chaque convoyeur de déviation latérale (150, 152), l'entrée du dispositif d'aiguillage (160) étant alignée avec la trajectoire d'entrée des objets (100) et chaque sortie du dispositif d'aiguillage (160) étant située, une à la fois, à une position respective où la sortie est immédiatement en amont de l'entrée du convoyeur de déviation latérale correspondant (150, 152) pour créer de façon séquentielle, entre l'entrée (132) et la sortie du système (130), un premier circuit de transport passant par la première trajectoire de déviation et se terminant du côté droit de la zone commune de réception (190), et un deuxième circuit de transport passant par la deuxième trajectoire de déviation et se terminant du côté gauche de la zone commune de réception (190), afin d'inverser l'orientation des objets (100) qui auront été transportés dans le premier circuit de transport par rapport aux objets (100) qui auront été transportés dans le deuxième circuit de transport.

2. Le système (130) selon la revendication 1, dans lequel la première trajectoire de déviation est, à l'entrée du premier convoyeur de déviation latérale (150), vers la droite relativement à la trajectoire d'entrée des objets (100), la deuxième trajectoire de déviation étant, à l'entrée du deuxième convoyeur de déviation latérale (152), vers la gauche relativement à la trajectoire d'entrée des objets (100).

3. Le système (130) selon la revendication 1 ou 2, dans lequel la première trajectoire de déviation et la deuxième trajectoire de déviation sont sensiblement horizontales.

4. Le système (130) selon la revendication 3, dans lequel la première trajectoire de déviation et la deuxième trajectoire de déviation sont ininterrompues.

5. Le système (130) selon l'une quelconque des revendications 1 à 4, dans lequel le dispositif d'aiguillage (160) inclut un cadre (166) sur lequel sont montées deux sections de convoyage, le cadre (166) étant monté de façon pivotante sur une base inférieure et pouvant pivoter autour d'un axe de rotation (164) qui est sensiblement parallèle à la trajectoire d'entrée des objets (100).

6. Le système (130) selon l'une quelconque des revendications 1 à 5, dans lequel le système (130) inclut également :
un dispositif de séparation (170) des objets (100) en nappes séquentielles et successivement espacées, le dispositif de séparation (170) étant situé à l'entrée (132) du système (130) et en amont de l'entrée du dispositif d'aiguillage (160).

7. Le système (130) selon la revendication 6, dans lequel les nappes séquentiellement formées par le dispositif de séparation (170) comportent sensiblement le même nombre d'objets (100).

8. Le système (130) selon l'une quelconque des revendications 1 à 7, dans lequel les objets à repositionner (100) ont au moins un panneau principal (104, 106) fait d'un matériau sensiblement inflexible, chaque objet (100) étant maintenu constamment à plat entre l'entrée (132) et la sortie du système (130) de façon à prévenir toute dégradation visible dans le matériau sensiblement inflexible.

9. Le système (130) selon l'une quelconque des revendications 1 à 8, dans lequel la zone commune de réception (190) située à la sortie du système (130) inclut un convoyeur de sortie (140) pouvant recevoir les objets (100) qui auront été transportés dans le circuit de transport de droite et de gauche, le convoyeur de sortie (140) permettant le déplacement des objets (100) le long d'une trajectoire de sortie qui est sensiblement perpendiculaire aux directions des trajectoires de déviation dans la zone commune de réception (190).

10. Le système (130) selon l'une quelconque des revendications 1 à 9, dans lequel les objets (100) passant par le premier circuit de transport sont pivotées d'un premier angle dans le plan horizontal entre l'entrée et la sortie du système (130), et que les objets (100) passant par le circuit de transport de gauche sont pivotées d'un deuxième angle dans le plan horizontal entre l'entrée et la sortie du système (130), le premier angle et le deuxième angle totalisant 180 degrés lorsqu'ils ont additionnés.

11. Le système (130) selon l'une quelconque des revendications 1 à 10, dans lequel les objets (100) sont supportés par le haut et par le bas tout le long du circuit de transport de droite et tout le long du circuit de transport de gauche.

12. Le système (130) selon l'une quelconque des revendications 1 à 11, dans lequel au moins une partie des convoyeurs de déviation latérale (150, 152) inclut des rouleaux motorisés.

13. Le système (130) selon l'une quelconque des revendications 1 à 11, dans lequel les convoyeurs de déviation latérale (150, 152) incluent des rouleaux qui exercent une pression vers le bas sur le haut des objets (100) transportés.

14. Le système (130) selon l'une quelconque des revendications 1 à 13, dans lequel les objets (100) ont une épaisseur variable.

15. Le système (130) selon l'une quelconque des revendications 1 à 14, dans lequel les objets (100) sont des boîtes pliantes, le système (130) repositionnant les boîtes pliantes (100) dans une configuration plane.

## Patentansprüche

1. System (130) zum Neupositionieren von flachen Objekten (100), die an einem Eingang (132) des Systems (130) überlappend angeordnet werden können, wobei die Objekte (100) alle eine gleiche Ausgangsorientierung in Bezug auf die anderen entlang eines Eingangspfads (124) besitzen, der im Wesentlichen geradlinig und horizontal ist, wobei das System (130) aufweist:
einen ersten seitlichen Umlenkförderer (150) und einen zweiten seitlichen Umlenkförderer (152), die jeweils einen Eingang, der stromabwärts des Eingangs (132) des Systems (130) angeordnet ist, und einen Ausgang, der unmittelbar stromaufwärts von einem Ausgang (134) des Systems (130) angeordnet ist, aufweisen, wobei der erste seitliche Umlenkförderer (150) einen ersten Umlenkpfad mit mindestens einem gekrümmten horizontalen Abschnitt definiert und der zweite seitliche Umlenkförderer (152) einen zweiten Umlenkpfad mit mindestens einem gekrümmten horizontalen Abschnitt definiert, wobei der Ausgang des ersten seitlichen Umlenkförderers (150) und der Ausgang des zweiten seitlichen Umlenkförderers (152) seitlich voneinander beabstandet sind und sich jeweils auf einer rechten Seite und einer linken Seite einer gemeinsamen Empfangszone (190) am Ausgang (134) des Systems (130) befinden, wobei die beiden Umlenkpfade an den Ausgängen der seitlichen Umlenkförderer (150, 152) Richtungen besitzen, die im Wesentlichen parallel sind und einander diametral gegenüberliegen; und
eine Weicheneinrichtung (160) mit einem Eingang und zwei verschiedenen Ausgängen, einem für jeden seitlichen Umlenkförderer (150, 152), wobei der Eingang der Weicheneinrichtung (160) auf den Eingangspfad der Objekte (100) ausgerichtet ist und jeder Ausgang der Weicheneinrichtung (160), einer nach dem anderen, an einer jeweiligen Position angeordnet ist, an der sich der Ausgang unmittelbar stromaufwärts des Eingangs des entsprechenden seitlichen Umlenkförderers (150, 152) befindet, um aufeinanderfolgend zwischen dem Eingang (132) und dem Ausgang des Systems (130) eine erste Transportstrecke, die über den ersten Umlenkpfad verläuft und auf der rechten Seite der gemeinsamen Empfangszone (190) endet, und eine zweite Transportstrecke, die über den zweiten Umlenkpfad verläuft und auf der linken Seite der gemeinsamen Empfangszone (190) endet, zu schaffen, um die Orientierung der Objekte (100), die über die erste Transportstrecke transportiert wurden, in Bezug auf die Objekte (100), die über die zweite Transportstrecke transportiert wurden, umzukehren.

2. System (130) nach Anspruch 1, wobei der erste Umlenkpfad am Eingang des ersten seitlichen Umlenkförderers (150) relativ zu dem Eingangspfad der Objekte (100) nach rechts verläuft, und wobei der zweite Umlenkpfad am Eingang des zweiten seitlichen Umlenkförderers (152) relativ zu dem Eingangspfad der Objekte (100) nach links verläuft.

3. System (130) nach Anspruch 1 oder 2, wobei der erste Umlenkpfad und der zweite Umlenkpfad im Wesentlichen horizontal sind.

4. System (130) nach Anspruch 3, wobei der erste Umlenkpfad und der zweite Umlenkpfad ununterbrochen sind.

5. System (130) nach einem der Ansprüche 1 bis 4, wobei die Weicheneinrichtung (160) einen Rahmen (166) aufweist, an dem zwei Förderabschnitte montiert sind, wobei der Rahmen (166) schwenkbar an einer unteren Basis montiert ist und schwenkbar um eine Drehachse (164) ist, die im Wesentlichen parallel zum Eingangspfad der Objekte (100) ist.

6. System (130) nach einem der Ansprüche 1 bis 5, wobei das System (130) ferner aufweist:
eine Vorrichtung (170) zum Trennen der Objekte (100) in aufeinanderfolgende und aufeinanderfolgend beabstandete Schichten, wobei sich die Trennvorrichtung (170) am Eingang (132) des Systems (130) und stromaufwärts des Eingangs der Weicheneinrichtung (160) befindet.

7. System (130) nach Anspruch 6, wobei die mittels der Trennvorrichtung (170) aufeinanderfolgend ausgebildeten Schichten im Wesentlichen die gleiche Anzahl von Objekten (100) aufweisen.

8. System (130) nach einem der Ansprüche 1 bis 7, wobei die neuzupositionierenden Objekte (100) mindestens eine Hauptplatte (104, 106) aufweisen, die aus einem im Wesentlichen unflexiblen Material hergestellt ist, wobei jedes Objekt (100) zwischen dem Eingang (132) und dem Ausgang des Systems (130) andauernd flach gehalten wird, um eine sichtbare Verschlechterung des im Wesentlichen unflexiblen Materials zu vermeiden.

9. System (130) nach einem der Ansprüche 1 bis 8, wobei die gemeinsame Empfangszone (190) am Ausgang des Systems (130) einen Ausgangsförderer (140) umfasst, der die Objekte (100), die über die rechte und linke Transportstrecke transportiert worden sind, empfangen kann, wobei der Ausgangsförderer (140) das Bewegen der Objekte (100) entlang eines Ausgangspfads gestattet, der im Wesentlichen orthogonal zu den Richtungen der Umlenkpfade in der gemeinsamen Empfangszone (190) ist.

10. System (130) nach einem der Ansprüche 1 bis 9, wobei die die erste Transportstrecke durchlaufenden Objekte (100) um einen ersten Winkel in der horizontalen Ebene zwischen dem Eingang und dem Ausgang des Systems (130) gedreht werden, und die die linke Transportstrecke durchlaufenden Objekte (100) um einen zweiten Winkel in der horizontalen Ebene zwischen dem Eingang und dem Ausgang des Systems (130) gedreht werden, wobei der erste Winkel und der zweite Winkel aufsummiert 180 Grad ergeben.

11. System (130) nach einem der Ansprüche 1 bis 10, wobei die Objekte (100) von oben und von unten entlang der gesamten rechten Transportstrecke und entlang der gesamten linken Transportsstrecke abgestützt werden.

12. System (130) nach einem der Ansprüche 1 bis 11, wobei mindestens ein Teil der seitlichen Umlenkförderer (150, 152) motorisierte Rollen aufweist.

13. System (130) nach einem der Ansprüche 1 bis 11, bei dem die seitlichen Umlenkförderer (150, 152) Rollen aufweisen, die auf die Oberseite der transportierten Objekte (100) einen nach unten gerichteten Druck ausüben.

14. System (130) nach einem der Ansprüche 1 bis 13, wobei die Objekte (100) eine variable Dicke besitzen.

15. System (130) nach einem der Ansprüche 1 bis 14, wobei die Objekte (100) Faltschachteln sind, wobei das System (130) die Faltschachteln (100) in einer flachen Konfiguration neupositioniert.

## Claims

1. A system (130) for repositioning flat-disposed objects (100) that can be arranged in an overlapping manner at an inlet (132) of the system (130), the objects (100) having a same initial orientation with reference to one another along a substantially linear and horizontal inlet path (124), the system (130) including:
a first lateral deviation conveyor (150) and a second lateral deviation conveyor (152), each having an inlet located downstream the inlet (132) of the system (130), and an outlet located immediately upstream an outlet (134) of the system (130), the first lateral deviation conveyor (150) defining a first deviation path having at least one horizontal and curved segment, and the second lateral deviation conveyor (152) defining a second deviation path having at least one horizontal and curved segment, the outlet of the first lateral deviation conveyor (150) and the outlet of the second lateral deviation conveyor (152) being laterally spaced apart from one another and being respectively located on a right side and on a left side of a common receiving zone (190) located at the outlet (134) of the system (130), the two deviation paths having, at the outlets to the lateral deviation conveyors (150, 152), directions that are substantially parallel and diametrically opposite to one another; and
a diverting device (160) having one inlet and two distinct outlets, one for each lateral deviation conveyor (150, 152), the inlet of the diverting device (160) being in registry with the inlet path of the objects (100) and each outlet of the diverting device (160) being located, one at a time, at a respective position where the outlet is immediately upstream the inlet of the corresponding lateral deviation conveyor (150, 152) to sequentially create, between the inlet (132) and the outlet of the system (130), a first transport circuit passing through the first deviation path and ending on the right side of the common receiving zone (190), and a second transport circuit passing through the second deviation path and ending on the left side of the common receiving zone (190), to invert the orientation of the objects (100) transported in the first transport circuit with reference to the objects (100) transported in the second transport circuit.

2. The system (130) according to claim 1, wherein the first deviation path is, at the inlet of the first lateral deviation conveyor (150), toward the right with reference to the inlet path of the objects (100), the second deviation path being, at the inlet of the second lateral deviation conveyor (152), toward the left with reference to the inlet path of the objects (100).

3. The system (130) according to claim 1 or 2, wherein the first lateral deviation path and the second lateral deviation path are substantially horizontal.

4. The system (130) according to claim 3, wherein the first lateral deviation path and the second lateral deviation path are uninterrupted.

5. The system (130) according to any one of claims 1 to 4, wherein the diverting device (160) includes a frame (166) on which two conveyor sections are mounted, the frame (166) being mounted so as to pivot on a bottom base around a pivot axis (164) that is substantially parallel to the inlet path of the objects (100).

6. The system (130) according to any one of claims 1 to 5, in which the system (130) further includes:
a separation device (170) for the objects (100) to create successive and spaced-apart shingled streams, the separation device (170) being located at the inlet (132) of the system (130) and upstream the inlet of the diverting device (160).

7. The system (130) according to claim 6, wherein the shingled streams sequentially created by the separation device (170) include approximately a same number of objects (100).

8. The system (130) according to any one of claims 1 to 7, wherein the objects (100) to be repositioned have at least one main panel (104, 106) made of a substantially inflexible material, each object (100) being continuously maintained in a flat configuration between the inlet (132) and the outlet (134) of the system (130) so as to prevent any visible degradation of the substantially inflexible material.

9. The system (130) according to any one of claims 1 to 8, wherein the common receiving zone (190) located at the outlet of the system (130) includes an outlet conveyor (140) to receive the objects (100) transported in the right and left transport circuits, the outlet conveyor (140) moving the objects (100) along an outlet path that is substantially perpendicular to the directions of the deviation paths in the common receiving zone (190).

10. The system (130) according to any one of claims 1 to 9, wherein the objects (100) passing through the first transport circuit are pivoted over a first angle in the horizontal plane between the inlet and the outlet of the system (130), and the objects (100) passing through the second transport circuit are pivoted over a second angle in the horizontal plane between the inlet and the outlet of the system (130), the first angle and the second angle totaling 180 degrees when added together.

11. The system (130) according to any one of claims 1 to 10, wherein the objects (130) are supported above and below along the entire right transport circuit and the entire left transport circuit.

12. The system (130) according to any one of claims 1 to 11, wherein at least one part of the lateral deviation conveyors (150, 152) includes motorized rollers.

13. The system (130) according to any one of claims 1 to 11, wherein the lateral deviation conveyors (150, 152) include rollers that apply a downward pressure on a top of the transported objects (100).

14. The system (130) according to any one of claims 1 to 13, wherein the objects (130) have a variable thickness.

15. The system (130) according to any one of claims 1 to 14, wherein the objects (100) are folding cartons, the system (100) repositioning the folding cartons (100) in a flat configuration.
